# EUROPEAN PATENT SPECIFICATION

(11) **EP 1 494 346 B1**
(45) Date of publication and mention of the grant of the patent: **30.01.2013**
(21) Application number: 04102917.4
(22) Date of filing: 23.06.2004
(51) Int. Cl.: H02P 25/04, H02P 29/02, H02P 1/44

(54) **A controller device, in particular for induction motors and more particularly for compressors in refrigerating apparatuses.**
Steuerungsgerät, insbesondere für einen Asynchronmotor und mehr insbesondere für Kompressoren von kältetechnischen Apparaten
Dispositif de commande, notamment pour un moteur asynchrone et en plus particulier dans les compresseurs d'appareils frigorifiques

(30) Priority: 04.07.2003 IT MI20031371; 25.07.2003 IT MI20031532
(43) Date of publication of application: 05.01.2005
(73) Proprietor: B.D.G. EL. S.P.A., 21020 Bardello (Varese) (IT)
(72) Inventor: Del Grande, Carlo, 21100, Varese (IT)
(74) Representative: Tansini, Elio Fabrizio

(56) References cited:
- EP-A2- 0 031 688
- EP-A2- 1 100 190
- JP-A- 5 244 787
- US-A- 5 483 139
- US-A- 5 488 834

## Description

The present invention relates to a controller unit, to be used in association with induction motors and more particularly with induction motors of compressors for refrigerating apparatus (or in any case compressors).

It is known that compressors for refrigerating apparatus consist of particular electromechanical machinery that is characterised by the presence of two distinct electric windings: a "starting" winding, to supply the required power at the beginning of the rotor rotation, and a "running" winding used when the motor runs under steady conditions, to keep the desired rotation speed of the rotor.

In compressors, and more generally in machinery based on electric induction motors, at the end of the starting step it is typical for the starting winding to be disconnected from the power supply (i.e. current must not run through this winding any longer), since, on the contrary, it would be under overheated conditions that could impair the integrity and consequently the correct operation of same.

It is known from EP0031688 a starting control system is shown, which mainly exhibits means for varying the current and acting for progressively reduction of the load on the motor during the starting phase and control means for determining the "end" of the starting phase and relying on a "control parameter" which is the so-called *back EMF* generated by the motor itself.

US5488834 shows a control circuit for fridges wherein suitable sensors detect "environmental" temperature and these signals are used for opening/closing circuits linked to the motor windings; moreover, a pre-set operating time is also used as a further parameter control.

EP1100190 illustrates a method and device for controlling the current feed and for the static capacity of a compressor, which works on the basis of "control parameters" and "feedback retro-action": such control parameters are mainly represented by pre-set periods of time("intervention times" in the wording of this document)

JP5244787 talks about a starting circuit for induction motors, wherein the change in resistance in the PTC (which in turn is dependent from the current circulating in the starting winding) is employed for switching from the starting winding to the operating/steady-state winding: even during steady-state operation, a control strategy shown in this reference relies on the intrinsic change of resistance of a PTC module.

Finally, in US US5483139 an induction motor is controlled for selectively supplying voltage to the start and run windings: for this aim, an alternating voltage having a plurality of 360° cycles is repetitively applied to the start winding in a predetermined angular/phase range until the motor is running at a speed close to synchronous speed. In this prior art reference, the voltage/currents are regularly repetitive waveforms which are applied for a substantial amount of time to the motor windings, and in this manner the overall energy consumption in the starting phase is adversely affected.

Generally the known art contemplates use of relays (electromechanical devices) capable of performing the function of a switch/controller; as soon as the motor terminates the starting step, the current in the running circuit is insufficient to keep the relay energised and consequently the latter modifies its operating condition and opens the feeding circuit of the starting winding.
These devices however, not only are rather expensive, but they are also disadvantageous both in terms of construction (as they are made up of moving mechanical parts) and in terms of adaptability (as they are to be conveniently sized for each type of compressor).

Alternatively, control circuits are known that use variable-resistance resistors (PTC thermistors). A resistor of this type is associated with the starting winding and conducts the electric current as long as the resistor temperature keeps under a given value (defined as "Curie point"). Vice versa, when the PTC temperature increases beyond the critical threshold, the thermistor increases its resistance and stops powering the winding, thus terminating the starting step.

From a technical point of view these PTCs must be sized also taking into account the supply current, so that the latter may heat the thermistor to such an extent that the Curie point is reached exactly at the end of the starting step, and so that the PTC may be always maintained in its state of "low-conductivity".

Unfortunately, this known technique compulsorily involves adoption of PTCs of non negligible sizes that can be maintained in their state of "low-conductivity" through continuous supply of current of significant magnitude ; this gives rise to undesirable heat losses and energy consumption.

In addition the motor used by the compressor needs a second control system to be operating under normal running conditions.

This second control system mainly aims at detecting a possible overheating of the compressor so as to stop operation of same (to avoid damages to the motor and/or the whole compressor structure).

Problems of this kind may arise as a consequence of excessive requests for refrigeration from the apparatus (typically, in the case when the doors are not correctly closed or when high-temperature articles are placed in the apparatus) or due to mechanical failure of the motor (binding or jamming of the rotor, for example).

Generally, in any case, an excessive increase in the compressor temperature is due to an overload condition under which the compressor is operating.

The known systems performing the just described function consist of a bimetallic disc or plate thermally associated with a resistor in series with the two compressor windings, and mechanically associated with electrical contacts in the current feed circuit to the motor windings. Depending on the heating of the resistor, due to the magnitude of the current travelling through it, the plate will be heated and will deform at a given "trigger temperature" thereby opening the feeding circuit.

The bimetallic plate is itself heated by slow thermal transients caused by overload conditions (such as introduction of articles having a very high temperature into the appliance. These conditions will result in a gradual increase of the compressor load which increases its temperature and thereby increases the temperature of the bimetallic plate, which is normally mounted close to the shell or fusite of the compressor).

In addition, present bimetallic plates can also operate in cases in which there is a very quick increase in the supply current, (in case of binding of the rotor, for example), which lead to a correspondingly quick temperature increase in the winding.

Unfortunately, these bimetallic-plate controllers also have a very high specific character, due to the fact that, depending on the structural and design features of the compressor, the sizes and thermal-conduction parameters of the plate must be suitably adapted.

Consequently, a large number of different varieties must be produced and the logistic organisation connected with large mass production is very complicated, and both factors bring about an increase in costs.

Accordingly, the present invention aims at solving the above mentioned drawbacks.

In particular it is an aim of the present invention to make available a controller unit for compressors, in particular compressors of refrigerating apparatus, that is provided with a starting control device characterised by reduced consumption, particularly during operation under steady conditions of the compressor, great reliability and cheapness.

Another aim of the present invention is to provide a controller unit for compressors which includes an overload-control apparatus which can be easily adapted to different types of compressors.

The foregoing and further aims are substantially achieved by a controller device, in particular for induction motors and more particularly for induction motors of compressors for refrigerating apparatus, in accordance with the features set out in the appended claims.

Further features and advantages will become more apparent from the description of an embodiment given by way of example, of a controller unit for a compressor, in particular for compressors of refrigerating apparatus, illustrated in the accompanying figures, in which:
- Fig. 1 is a diagram showing a control device in accordance with the present invention;
- Fig. 2 is an alternative embodiment of part of the device in Fig. 1;
- Fig. 3 is a block diagram describing a possible control method in accordance with the present invention;
- Figs. 4 and 5 show the values against time of some disturbance voltages/currents to be used in the device and/or the method in accordance with the present invention; and
- Fig. 6 is a diagram showing part of the controller unit in accordance with the present invention.

The controller unit for compressors in accordance with the present invention is generally identified with reference numeral 1 in the accompanying drawings.

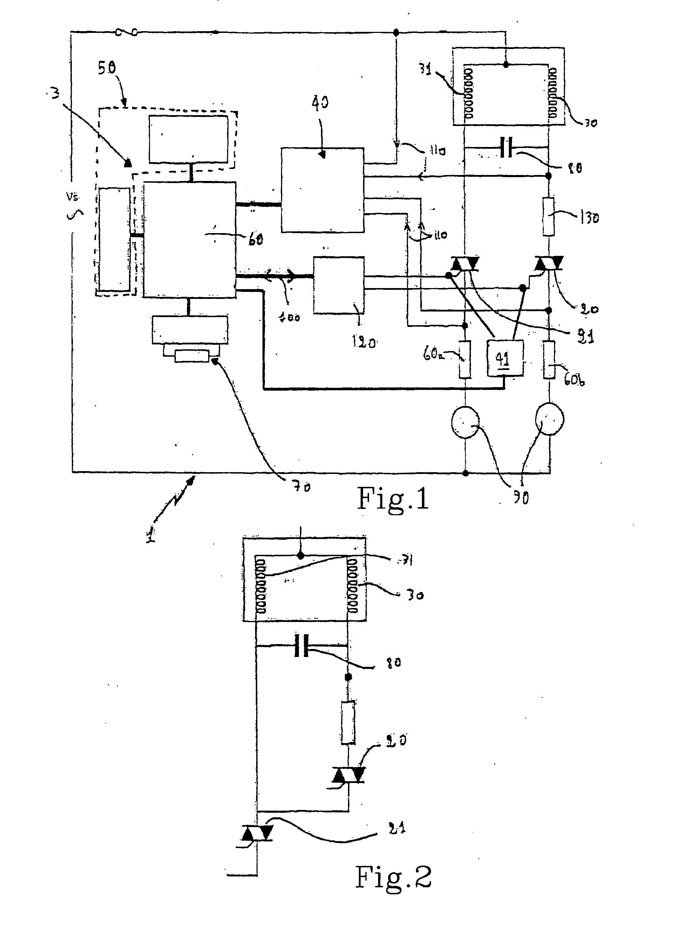

Denoted at "Vs" is the power line with which the circuit is connected (Fig. 1).

The device 1 in accordance with the present invention is able to operate, due to its "integrated" nature, both to control starting of the compressor (or the induction motor) and to control possible overload conditions of the same during running.

For the sake of clarity, in the present specification reference will be indifferently made to a compressor or an induction motor, without however limiting the object of the invention.

Device 1 regulates starting of the compressor in order to avoid failures and to inhibit power supply to a starting winding 30 of the compressor at the moment the starting step terminates; in addition during running of the compressor, device 1 prevents the compressor from being powered under critical conditions or conditions of potential danger and also prevents the winding temperatures from becoming too high.

The control device in accordance with the present invention includes a controller element 3 to regulate starting and running of the compressor via switching means 20, 21.

The switching means 20, 21 can be respectively activated on a starting winding 30 and a running winding 31 of the compressor to perform the previously mentioned functions.

From a structural point of view, controller 3 can be made in many different ways depending on requirements; for example it can consist of microprocessors or logic circuit elements combined with each other based on the particular needs.

Irrespective of the possible embodiments, controller 3 comprises a detecting block 40 (adapted to read at least one characteristic magnitude 110 of the compressor), a memory 50 adapted to contain a predetermined number of reference values. The memory 50 can be structured in different ways, depending on requirements; it can be an EEPROM, a flash memory, a passive circuit element (a capacitor, a resistor or other), suitably selected so as to have a given reference value (a capacity or resistance value or other), or any configuration of circuit elements the state of which can be changed to store information. Finally a processing unit 60 is present which is connected with the detecting block 40 and the memory 50.

The processing unit 60 processes the characteristic magnitude 110 read by the detecting block 40, to obtain a corresponding main parameter; subsequently this main parameter is compared with at least one of the reference values contained in memory 50 and a control signal 100 is then generated towards the switching means 20, 21 (depending on the result of the just mentioned comparing operation).

It is therefore apparent that by suitably selecting the reference values, the characteristic magnitudes 110 and main parameters, the compressor operation will be monitored and therefore it will be possible to intervene on one or both of the windings, thereby controlling both starting and running under steady conditions.

For example, the main parameter of the compressor can be of the "electric" type (or in other words it can be an electric magnitude) of the starting winding 30 and/or the running winding 31 of the compressor; correspondingly, the characteristic magnitude 110 of the compressor will be an "electric" magnitude (but it can also be a "thermal" magnitude, depending on requirements) of the same windings 30 and/or 31.

Conveniently, the different control methodologies to be carried out by device 1 during starting of the motor/compressor or during running of the motor/compressor can be performed based on any selection of the type of characteristic magnitudes 110; for instance, during starting of the compressor, current or voltage measurements can be sufficient.

For example, this characteristic magnitude can be a current flowing through the starting winding 30 and/or the running winding 31, a voltage at the ends of the starting winding 30 and/or the running winding 31; the characteristic magnitude can also be a current or voltage variation rate in the same windings or a ratio between two currents or voltages at different time instants.

To conveniently perform the control functions, device 1 comprises a voltage or current generator 41, adapted to be suitably connected with the starting winding 30 and/or the running winding 31 to apply a predetermined disturbance voltage "Vd" or disturbance current "Id" thereto; the detecting block 40 then comprises a current or voltage reading unit active on the starting winding 30 and/or the running winding 31 upon application of said disturbance voltage or current.

It will be recognised that in the spirit of the present invention the just exemplified disturbance signals can be sent to one or both the compressor windings, depending on requirements; in addition the disturbance currents/voltages can be admitted to the windings before the starting step and during the running step and can be admitted following any time sequences.

For instance, a disturbance current/voltage can be induced in the starting winding 30 during running under steady conditions.

In fact it is typical at the end of the starting step, to disconnect the winding 30 from the power supply , which winding 30 is not therefore carrying a current (unlike the running winding 31); in this way winding 30 can conveniently be used for carrying out the control method described below.

Paying particular attention to the already mentioned main parameter, it is possible to see that it can be an electric resistance; in this case the processing unit 60 is able to calculate, depending on the disturbance voltage or current imposed by the voltage or current generator 41 (and on the current or voltage read by a suitable reading unit), the electric resistance of the starting winding 30 and/or running winding 31.

The processing unit can also calculate the winding temperature using the temperature coefficient of the electric resistance which for a given winding will have known properties.

From a structural point of view, the processing unit may also comprise two resistors 60a and 60b connected in series with the starting winding 30 and /or the running winding 31, the main task of which is to detect the current passing through the windings themselves; also present is a circuit 120 for activation of switching means shown as triacs, suitably positioned within controller 3 (Fig. 1).

As already mentioned above, generator 41 is set to supply the disturbance voltage/current at predetermined time intervals that can be selected based on different control strategies.

The present invention may also provide control strategies that are not based on introduction/induction of disturbance currents/voltages, but that may comprise direct measurements of continuous alternating (AC) currents and voltages applied to windings 30 and/or 31.

When these direct measurements take place, processing of the control signal may merely consist of comparing the current/voltage values directly detected in /at the windings with suitable reference values.

Direct measurements are particularly advantageous during starting of the motor/compressor; in other words, during starting of the motor/compressor operating sub-steps may be provided in which the currents and /or voltages applied to windings 30 and/or 31 are directly measured, which currents/voltages are in turn immediately compared with the suitable reference values or can be used to define magnitudes of the "derived" type.

It is for example possible to establish a ratio between the values of the measured currents or voltages in two different time instants and to compare this numerical ratio (suitably calculated by the processing unit) with a pre-stored value.

It is also possible to carry out an incremental measurement of the currents/voltages applied to the windings, or to carry out two direct measurements in a predetermined time interval and calculate the ratio between the difference of these currents and the time interval itself; after this calculation, this variation rate of the currents (or voltages) in time can be compared with an appropriate pre-stored value and the control signal 100 can be generated, if required.

It is also to be noted that, based on the specific requirements, the direct measurements can be also carried out during running under steady conditions of the motor/compressor, as they can for example be used to determine the current flow values in the windings 30 or 31, or to establish the growth or reduction rate of current in time.

The starting step of the compressor will be now examined; depending on the "starting" signal (e.g. from a thermostat reading a temperature of a refrigerating compartment), the required electric energy can be sent to the control device 1; at this point controller 3 operates on the switching means 20 and/or 21 so as to allow the current to flow to the windings, so as to give rise first to starting and then to running under steady conditions.

Conveniently, after a predetermined time interval starting from closure of one or both switches 20 and/or 21 (i.e. from beginning of the starting step) a direct measurement of the current/voltage in the winding disturbance can be made and then the detecting/comparing operation can be performed and possibly a control signal can be emitted.

This control signal, if generated, is sent to the switching means 20 and/or 21 to stop current flow to the windings; in this way the compressor is stopped during the starting step.

Conveniently, based on the measurements done, it is possible to verify the correct starting of the compressor; this can be verified if the measured currents at two time instants in succession show decreasing values in a regular manner.

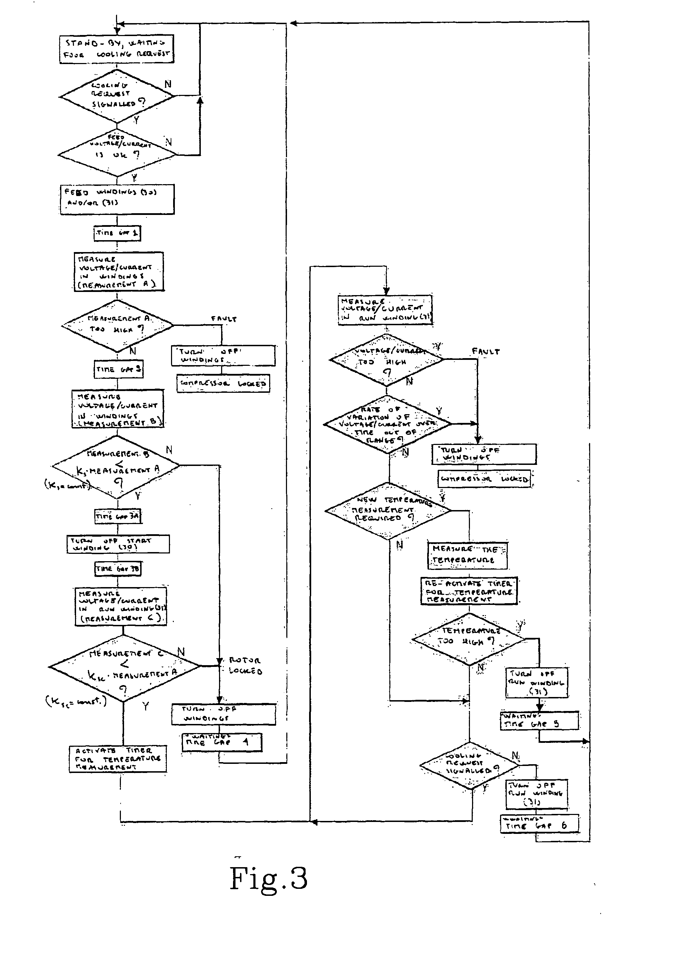

It is also to be noted that in the initial part of the algorithm in Fig. 3 the important steps of the starting control are indicated by the direct current measurements and also indicated are the time intervals (delays "1" and "2") measured starting from the beginning of the motor/compressor starting, at which said direct measurements in succession are carried out. In practice the starting control may comprise more than two direct measurements carried out at different time intervals or delays and the algorithm in Fig. 3 is given by way of example only.

The time interval between two direct measurements can be selected taking into account different factors; for example, this time interval can be sufficiently long to enable all transient electric phenomena occurring in the windings to be neglected but at the same time it must be sufficiently short to enable the operating conditions of the compressor to be determined so as to discover as soon as possible whether the motor has started properly.

When the compressor is running device 1 can then generate a series of disturbance voltages/currents having the same time duration and at a constant frequency so as to periodically monitor the operating conditions of the compressor.

Consistently with the present invention, following admission of disturbance current/voltage, the controller 3, by means of its sub-components 40, 50 and 60 is able to carry out measurements and comparisons and therefore to determine the operating conditions of the motor/compressor during running.

The just described succession in time of the current/voltage pulses is not in any case binding; the time intervals can be varied, as well as the duration of the disturbance pulses.

For instance, after the first disturbance pulse (or the first direct measurement) a second disturbance current/voltage can be generated (or a second direct measurement can be carried out) to execute a second measurement of the operating state of the compressor (during running under steady conditions or during starting, respectively).

For example, during starting in the second time interval the compressor can be in a situation at which it has reached higher temperatures and running conditions (and at which the supply current in the windings will tend to be reduced), therefore the direct measurement can be positioned in time so as to be able to judge whether the compressor motor has reached a sufficient running speed or not.

Consistently with the above description during the start period a first and/or second time interval can be used to carry out incremental direct measurements .by comparing the measurements carried out after the first and the second intervals, it is possible to determine whether the compressor motor has successfully started. If, based on this comparison, the occurred starting is not verified, a condition of "locked rotor/motor" can be identified; in this case, the controller 3 can generate a control signal 100 directed to both the switching means 20 and 21 to open them and thus break power supply to the compressor, thereby avoiding overheating and other operating drawbacks.

Fig 3 also shows how a possible failure of the compressor could be detected after the first time delay (or in other words, after said first time gap), in this case if the winding current was too high the control signal 100 can be generated to open the switching means 20, 21.

It is also possible to carry out measurements by applying disturbance currents/voltages to the motor/compressor windings even when said windings are not carrying electric energy from the external power line; this can for example take place when the motor/compressor has been de-energised for long (when the desired temperature has been reached in a refrigerating compartment, for example) or under transient de-energising conditions.

The switching means 20, 21 can also be controlled so as to supply current/voltage to the starting winding 30 alone, to the running winding 31 alone or to both of them; in any case in the present control method a step can be provided for selectively determining which windings are to be supplied during starting or during running under steady conditions.

In particular, the control method can involve a first selective-determination step in which, during starting of the motor/compressor, both windings 30 and 31 are supplied from the external power line, followed by a step of excluding the starting winding 30 at the end of starting (which results in the fact that during running only winding 31 carries the current).

Advantageously, in addition to selectively determining which windings of the motor/compressor are to be connected to or disconnected from the external power line, the present method can also carry out a selective choice of the control strategies to be executed on the motor/compressor itself.

In more detail, the present method comprises a step of selectively choosing at least between a first control strategy and a second control strategy depending on the operating conditions of the motor and/or the compressor; it will be appreciated that the first control strategy (that may be based on the "direct measurements" of the currents or voltages in the windings) can be selected during starting of the motor and/or the compressor, whereas the second control strategy (that may be conveniently based on the calculation of a resistance parameter of the windings depending on admission of a disturbance current/voltage) can be selected during running of the motor and/or the compressor under steady conditions.

From the point of view of the value of the disturbance voltage/current against time, different possibilities are provided in the present invention to be selected based on the different requirements; in any case, the preferred embodiments for the disturbance voltages/currents are of such a nature that the latter have a non-zero average value over a pre-determined working time of the compressor.

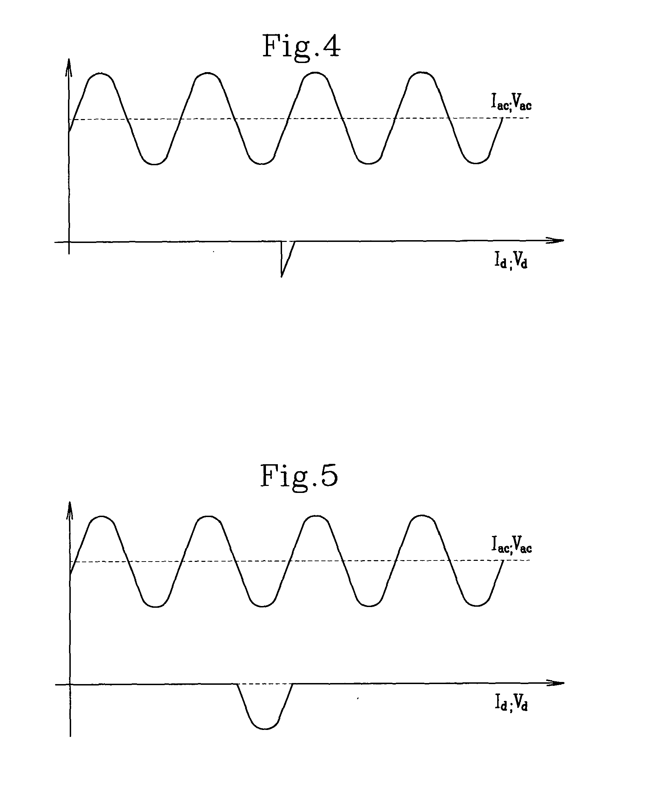

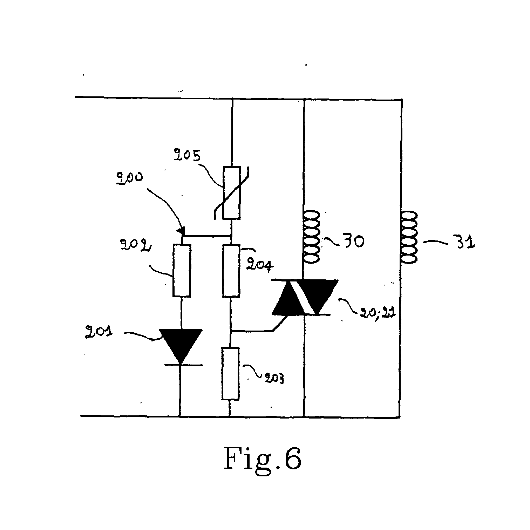

Examples of these values against time are reproduced in Figs. 4 to 7, here the y axis shows the mains voltage "Vs" or "Vac" and the disturbance current through the winding "Id" or the disturbance voltage "Vd" across the winding .

These values can be obtained by suitably operating the switching means 20, 21, by generator 41.

In addition, within the scope of the present invention, the disturbance currents/voltages are imparted to the windings with a suitable synchronisation. At this point this resultant current/voltage, due to inductive phenomena, is not coincident with the supply current/voltage coming from an external power line and in most cases it is an alternating current/voltage of a defined frequency (usually 50-60 Hz). Therefore in the specification of the invention this resultant voltage/current is intended as originating from the combination of the supply current/voltage "Vs" to which the inductive effects (or the induced electromotive forces) are added that are given by the variability of the electromagnetic fields typical of electric machines.

In fact, if the disturbance voltage Vd and current Id are summed over a complete number of the alternating cycles of the supply voltage Vac then the alternating components sum to zero whilst the sum of Vd and Id are not zero. In this way ac effects which could interfere with the measurement, whether they come directly from the mains or by electromechanical induction between the windings can be minimised.

Fig. 4 shows a first form of a disturbance voltage/current in a winding, obtained by activation of the respective switching means close to the end of one negative half cycle of the voltage across the winding: in this case, by suitably selecting the switching means (as detailed in the following) the conductivity state of said switching means extends in time until the current through the switch itself goes below a threshold value and the switch turns off (a short time after the current in the winding changes its sign).

Fig. 5 shows a second form of disturbance voltage/current in a winding, obtained by activating the switching means shortly after the voltage across the winding has reached a negative value It is to be noted again that by suitably selecting the switching means (for example by using triacs) the latter will go on conducting until just after the next change of sign of the current/voltage in the winding.

Advantageously, the waveforms in Figs. 4 and 5 can be introduced, during running of the compressor, in the starting winding 30, and the disturbance can be synchronised so as to minimise the electric-energy demand for generation of the disturbance current/voltage, to minimise the influences on the running winding 30, and to ensure accurate sampling of the operating compressor conditions.

Within the scope of the present invention it has been found that the waveforms of Figs. 4 and 5 can be used for temperature monitoring in either of the two windings when the compressor motor is not working.

As above mentioned, all forms of the disturbance current/voltage herein exemplified have a non-zero average value and consequently, when they are applied to a winding of the compressor they cause an important electric effect (voltage and current).

The application frequency of the disturbance currents/voltages, irrespective of the waveforms of the disturbance itself, can be synchronised with the frequency of the supply current/voltage; preferably, this synchronism condition must be verified in relation to the voltage variation frequency at the ends of the starting windings 30 (at the point it is connected with the respective switching means 20).

It is also to be noted that the disturbance currents/voltages can be applied at the most appropriate moments also keeping into account the particular type of motor/compressor; for example, if a running capacitor is present, it is advantageous to apply the disturbance voltage/current to winding 30 when the voltage at the ends of Triac 20 is zero, so as to avoid high switching currents and interferences in the main-parameter measurements.

Conveniently, the processing unit 60 is also able to verify that the electric resistance calculated based on application of these disturbance currents/voltages (and based on the operations for treatment of the detected parameters following said disturbance) is greater than the reference value and to correspondingly generate the control signal 100, taking account of the fact that a given calculated electric resistance corresponds to a given temperature of the winding under examination.

If required, the detecting block 40 can be set to detect at least one additional characteristic magnitude of the compressor that will be then processed, stored and compared with the appropriate reference values; in accordance with the present invention this additional characteristic magnitude can be the current flowing in the running winding 31 or the variation rate of said current in time or a direct temperature measurement at or near to the shell of the compressor.

The detection/comparison of this additional characteristic magnitude can be particularly useful in all cases in which the so-called "quick dynamics" of the motor/compressor are to be monitored (or in other words, all conditions in which temperatures change very quickly); in these cases the auxiliary characteristic magnitude can advantageously consist of the current (or the growth rate of the current in time, or the ratio of two current values taken at subsequent instants) flowing through the running winding 31 or the start winding 30.

As above mentioned, the present invention can detect the characteristic magnitude 110 under different operating conditions of the windings 30 and/or 31 (under transient de-energising conditions, for example); advantageously, this feature (of the device and the process) can be used to carry out more precise measurements, by stopping supply to a winding and temporarily inserting the disturbance current/voltage thereinto.

In more detail, in accordance with the present invention, a temporary (or voluntary) de-energising step of a winding can be provided, which step in turn precedes the step of applying the disturbance current/voltage; this temporary de-energising step aims at eliminating the effects due to the currents usually passing through the winding 30 or 31.

In accordance with the above description, a control method can be for example implemented which cyclically comprises the following steps:
a) determining a given time interval for operation of the motor/compressor during which at least one winding 30 and/or 31 is supplied with power;
b) stopping current/voltage supply to winding 30 and/or 31 on expiry of the above mentioned working interval;
c) applying the disturbance current/voltage and consequently calculating the temperature of winding 30 and/or 31; and
d) generating suitable control signals for the motor/compressor depending on the measured temperature.

As regards acceptable duration values of the working interval (or in other words, of the time period corresponding to each turning off/interruption of the supply to the winding) values included between 1 and 30 minutes, and preferably included between 10 and 30 minutes can be stated by way of example. In addition, a step of dynamically varying the working intervals depending on the specific requirements and/or on measurement of any auxiliary parameters can also be provided.

It is also possible to further improve precision and accuracy of the temperature measurements taking into account the fact that if the temperature range to be measured is narrow, the measurement errors are reduced; in this way the maximum temperature range of a winding can be divided into a plurality of sub-ranges (and each temperature sub-range will be preferably included within a maximum range of admissible temperatures for the motor/compressor), taking care to set suitable correction factors for the measurements carried out in these sub-ranges.

In the spirit of the present invention, it should be noted that measurements taken with the motor off are generally more accurate than with it running.

Practically, the above can be put into practice in accordance with the following succession of operating steps:
a) with the motor running carrying out a measurement of a reference value, preferably by applying a disturbance current/voltage to the winding 30 and/or 31 and then calculating a resistance and, consequently, a temperature;
b) temporarily and preferably in a voluntary manner turning off winding 30 and/or 31;
c) applying the disturbance voltage/current and consequently calculating a reference temperature of winding 30 and/or 31;
d) correcting the measured temperature from a) by an appropriate correction factor, such correction factor being chosen in function of (or in other words, depending on) the temperature range to which the carried out measurement belongs; and
e) generating suitable control signals for the motor/compressor depending on the measured and corrected temperature.

Conveniently, should a too high temperature be detected, supply to the windings will be stopped in an automatic manner, and calculation of the temperature following one of the hitherto described methods will be carried out so as to constantly monitor said temperature (in order to possibly be able to energise the motor/compressor again once the motor/compressor temperature has gone under a given limit). Turning back to the structure of device 1 it is possible to see that the switching means 20, 21 is associated in circuit with at least the controller element 3 and is drivable by the latter between a first operating condition (at which it allows a supply current to flow to the starting winding 30 and/or the running winding 31) and a second operating condition (at which it inhibits the supply voltage /current flow to the starting winding 30 and/or the running winding 31).

To do this, each of the switching means 20, 21 has a first end to be connected with a respective end of the starting winding 30 or the running winding 31 and also has a second end set for reception of the control signal 100 that commands the switching means between the first and second operating conditions.

Advantageously, the switching means 20, 21 comprises at least one semiconductor element that can be a triac; in this case the above mentioned second ends are respectively the gates of these triacs.

In accordance with the present invention device 1 may also comprise at least one thermal sensor 70 which is operatively interconnected with the controller element 3 to determine an operating temperature; this operating temperature can be a temperature of the outer shell of the compressor, the temperature within the compressor shell or the working temperature of the device 1 itself.

For instance, by measuring the temperature of the protective compressor shell with thermal sensor 70 a possible overheating can be determined and therefore the controller 3 can act on the triacs 20, 21 to stop the power supply to the compressor. A differential or incremental temperature measurement can be also carried out, so as to determine a temperature variation rate (or a temperature ratio at two instants in successions) and possibly act in accordance with pre-established control strategies.

Depending on the apparatus in which the motor/compressor can be installed, a structural and/or functional relationship can exist between the thermal sensor 70 and possible other temperature measurement means active on different parts of the apparatus itself.

The thermal sensor 70 is operatively active on the controller unit 3 to determine activation of same depending on predetermined temperature values.

Optionally, also present may be a thermo-sensitive element to be associated with the starting winding 30 and/or the running winding 31 of the compressor; consistently with the above description, this thermo-sensitive element can be operatively active on the switching means 20, 21 to sent it a command signal and establish the operating conditions of same.

In order to optimise operation of the "control device 1 + compressor" assembly, some optional components can also be present; for instance, a capacitive element 80 can be connected between the starting winding 30 and running winding 31 of the compressor, or in addition an auxiliary impedance can be connected in series with the starting winding 30 (that depending on the cases can be a fixed resistor or a PTC resistor); it is also possible to include safety means 90 which can be operatively associated with controller 3 and/or the switching means 20, 21 and be in series with the windings 30, 31; this safety means 90 preferably comprises switches and/or triacs and/or fuses.

When the present invention is used with compressors provided with at least one capacitive element active between the windings thereof and a switching element (preferably a triac) it is advantageous to incorporate an inductive and/or resistive element associated in circuit with the switching element in order to limit the growth rate of a current through the switching element itself.

It is to be noted that this restriction of the current growth rate is needed to avoid possible damages to the switching element that therefore can be conveniently operated only when voltage at the ends thereof is close to zero; in addition, operation of the switching element at the moment the voltage thereof is close to zero involves an important advantage in terms of increase in the accuracy of the current/voltage measurements required for putting into practice the control method in accordance with the present invention.

In order to optimise operation of the "control device 1 + compressor" assembly, some optional components can also be present; for instance, a capacitive element 80 can be set to be interposed between the starting winding 30 and running winding 31 of the compressor, or in addition an auxiliary impedance to be connected in circuit with the starting winding 30 (that depending on the cases can be a positive element, a PTC or a capacitor); it is also possible to set safety means 90 operatively associated with controller 3 and/or the switching means 20, 21 and/or to be interposed in circuit between the windings 30, 31; this safety means 90 preferably comprises switches and/or Triacs and/or fuses.

Turning back to possible operation/control strategies of device 1, said device provides a method of controlling starting and/or running of a compressor which (during the compressor starting and/or during the compressor running) comprises the following steps; first of all a characteristic magnitude 110 of the compressor is detected, then this magnitude is processed to obtain a corresponding main parameter; subsequently this main parameter is compared with at least one predetermined and pre-stored reference value and finally, depending on the comparison result, a control signal 100 is generated.

Conveniently, all these steps (detecting, processing, comparing and generating steps) are carried out sequentially first for compressor starting and then for compressor running.

At all events, the succession of steps can be varied depending on whether starting or running is to be controlled; for example, during starting the current/voltage in the windings can be directly measured without inducing electric disturbance, whereas during running of the motor/compressor a disturbance current/voltage can be advantageously introduced at arbitrarily selected time intervals and the resultant electric effects of same can be thus measured (that can be used for example for determining the electric resistance of the windings and consequently the winding temperature).

In accordance with the previous description, the main parameter of the compressor is an electric or thermal parameter of a starting winding 30 and/or a running winding 31 of the compressor, whereas the characteristic magnitude 110 of the compressor is the magnitude of an electric parameter of the starting winding 30 and/or the running winding 31 and/or an additional thermal parameter.

Conveniently, the detecting step can take place (preferably when the motor/compressor is running under steady conditions) by applying a predetermined disturbance voltage/current to the ends of the starting winding 30 and/or running winding 31 and reading the resultant voltage/current through the starting winding itself. (i.e. upon application of these predetermined voltage or current).

At this point it is to be noted that the voltage/current disturbance can be carried out on one or both of the windings; in particular, during running of the compressor the starting winding 30 can be stimulated to read the conditions of the running winding 31 (but it is also possible to intervene with the disturbance on both windings); falling within the scope of the present invention can also be control strategies involving insertion of disturbance in the running winding or, once more, in both windings, during starting.

Selection of the control strategies can be done in a dynamic manner, depending on the actual operating conditions and/or the compressor type.

For example, during normal running conditions, the winding temperature changes slowly and because the windings are disposed tightly close to each other their temperatures are substantially the same. If for some reason the current passing through a winding increases, that winding will become hot and it will cause the temperature of the adjacent winding to increase by conduction/convection/radiation. Therefore, in the presence of slow thermal dynamics (i.e. of slow speeds of temperature increase) the winding that is not carrying supply current can advantageously be used for measurement by inducing the disturbance currents/voltages therein and therefore calculating the resistance variation of same; in this case, in fact, the resistance (and temperature) of the two windings can be compared and it is advantageous to use the starting winding to monitor the running winding.

If also the quick thermal dynamics are wished to be monitored (or in other words, very high temperature variation rates), the above described strategy can be replaced with direct measurements of current in the run and /or start windings.

Selection in real time among the possible monitoring/control strategies can advantageously be done by controller 3.

It is also to be noted that in order to obtain the necessary measurement accuracy the device 1 in accordance with the invention may need an auxiliary timing unit that is connected in circuit with the different components of controller 3 to impose a given synchronism thereto. This auxiliary timing unit may consist of an electronic oscillator having a given work frequency (which is selected taking also into account be used to measure the frequency of the supply current/voltage in order to synchronise the different components of controller 3.

In accordance with the present invention, when using a disturbance voltage/current, having a non-zero average over a period of time, in order to completely carry out processing of the parameters necessary for generation of the control signal 100, calculation of the electric resistance of one or both windings 30 and/or 31 must be done based on an average value, so as to take into account the alternating mains voltage and induction effects from the varying electromagnetic fields in the motor.

Actually, this calculation comprises either a step of integrating a voltage or current from the winding (starting winding 30 and/or running winding 31) resulting from application of the disturbance current/voltage, or alternatively a step of calculating an average value of a resultant voltage or current in the winding (starting winding 30 and/or running winding 31) following application of the disturbance current/voltage.

Conveniently, a step of isolating direct current and/or voltage value starting from said step of calculating the average value follows said integrating or averaging step.

The "average values" or an "integrated values" are preferably determined out over a period of time of one or more complete variation cycles of the alternating voltage across the winding

The resultant values can then be processed by processing unit 60 to give a "equivalent resistance parameter which can then be processed to give a temperature measurement.

Measurement of the electric resistance in the presence of inductance and with supply currents/voltages and induced currents/voltages having a strong variability in time is difficult.

Therefore within the scope of the present invention it is possible to see how the resistance calculated through an average or an integration of the measured current/voltage values advantageously enables a "resistance parameter" to be.

In this way, the main parameter (that can be considered as equivalent to a hypothetical "equivalent electric resistance" that would be measured if a direct current or voltage were present in windings 30 and/or 31) actually is a parameter which minimises the effects of the alternating current/voltage supply and which therefore can be used to provide a realistic measurement of the temperature of the winding itself).

In other words, the present method advantageously comprises a sub-step of calculating a "parameter of direct-current equivalent resistance" that is practically calculated when the motor and/or the compressor is powered by a supply voltage/current varying in time.

Therefore it is possible to see that within the scope of the present invention the "parameter of direct-current equivalent resistance" defined above is practically treated, at least in terms of calculation and processing by unit 60, as a resistance of the starting winding 30 and/or the running winding 31. Conveniently, this parameter of direct-current equivalent resistance is calculated at least depending on the predetermined disturbance voltage and/or current applied to windings 30 and/or 31.

From the point of view of the comparison, controller 3 compares the thus obtained average value of the resistance with the contents of its memory 50 or, in other words, the comparing step comprises a sub-step of verifying whether the calculated electric resistance is greater than the predetermined pre-stored reference value or not.

In addition, following a control strategy in accordance with the present invention, it is possible to follow the temperature rise in the windings using the ratio between the electric resistance, or the voltage/current of the winding (at the moment of measurement) and a value of electric reference resistance or reference voltage/current (that can be store in memory 50); in this manner device 1 can be advantageously made independent and be applied to any type of compressor (or in other words, irrespective of the current/voltage/resistance values found in the different types of motors/compressors).

To achieve this the reference value/s can be loaded on memory 50 in several different manners; for example, they can be preloaded in the respective storage module still before assembling the device 1, or they can be directly read by the compressor during a "test stroke".

For example the reference value may be obtained through a preliminary acquisition step; this preliminary acquisition step being carried out by detecting an auxiliary characteristic magnitude of the compressor winding and processing it so as to obtain said predetermined reference value, then the result of this operation is stored in a memory 50 as "reference value".

Still in connection with the preliminary acquisition step, the operation can be performed in different ways depending on requirements.

For instance, the motor/compressor can be run for a predetermined period of time (so as to reach a steady operating condition that is substantially stabilised in terms of temperatures and currents/voltages), then the device 1 can carry out a predetermined number of measurements to detect a series of characteristic magnitudes that can be input to memory 50 and stored thereon as reference values.

Alternatively, the reference values (to be stored) can be calculated by an external calculation system that will operate based on its knowledge of a "stabilised" temperature of the motor/compressor; following this "external" calculation, the calculated values are introduced into the memory of device 1.

It is also possible that the processing unit 60 itself should calculate some values under predetermined temperature conditions of the motor/compressor, and store them in an independent manner; in this way the reference values thus obtained will be calculated taking into account the same tolerances in detecting the characteristic magnitudes 110 during operation of controller 3.

Conveniently, both the stored reference values and the operating parameters can be of various types (they can be the current in windings 30 and/or 31, or the temperatures of the outer shell in the motor/compressor, or the temperatures of the surrounding environment of the motor/compressor and so on) and can also be derived magnitudes, or magnitude ratios or incremental measurements.

The method hitherto described can be applied cyclically during operation under steady conditions of a compressor, so as to carry out a continuous monitoring of the operating conditions. In other words, the control method can be repeated at predetermined (arbitrary) time intervals, which in turn can be dynamically varied depending on the operating conditions themselves.

The fact that the detecting operation is performed with a periodical character is particularly advantageous in terms of reliability of the detection itself.

For instance, if the current absorbed by the motor and the temperature measured on the outer shell of the compressor (or the temperature of the windings) is low, a long time interval can be provided between two measurements in succession; on the contrary, if the temperature of the compressor shell (or the temperature of the windings) is close to a given threshold limit, measurements can be done with closer times so as to follow the compressor operation with greater accuracy.

According to another feature of the present invention, a step of activating the controller 3 depending on an external signal can be present; in other words, the control method can be put into practice (or correspondingly the control device 1 can be operated) only when the operating conditions of the apparatus call for it.

For example, referring to a refrigerator, it is known that the request of cooling the inner refrigerator compartment is done by means of the thermostat reading the temperature of the compartment itself; the signal sent by said thermostat can therefore be used to activate (or in other words to switch on) the controller 3 that in turn will regulate operation of the compressor. Optionally, controller 3 can be always connected with the external electric power, and the thermostat can send a signal to directly switch the compressor on or off.

In other words the device 1 in accordance with the invention operation of the control method depends on an "external" signal (relating to temperature, such as a cooling request from a refrigerating compartment).

Taking now into account other aspects of the method in accordance with the present invention it is possible to see that under determined operating conditions of the compressor, device 1 can cause it to be "locked-out", by cutting the supply current/voltage to the running winding 31 or the starting winding 30. It is also to be noted that this locked-out condition can be reversible or irreversible, depending on the gravity of the situation giving rise to it.

The locked-out condition can be generated on detection of current in the winding which is too high, said detection being suitably made by controller 3. In turn the controller can operate in such a manner as to cause a fuse to blow or the power supply from the electric power line to be excluded.

Restoration of the operating conditions (reversible lock-out) can be managed in an independent manner by controller 3 (based on possible subsequent measurements of the compressor conditions) or based on a manual reset by an operator.

Conveniently, depending on the gravity of the recorded anomaly, the controller 3 can decide whether to set an irreversible lock-out (when a too high current is detected on starting, for example) or to set a reversible lock-out (for example when an anomalous current is detected which however is not high enough to be a critical value).

In addition, the present method can provide for other controls; for example before starting, a preliminary control can be carried out to verify adequacy of the supply voltage and/or current, or also a preliminary control can be carried out to verify whether the compressor was previously in operation and/or has not yet become sufficiently cold.

In short, controller 3 can carry out different types of monitoring operations on the windings 30 and/or 31 of a compressor; for instance the following can be measured:
- the current value in the running winding 31 at different operation instants (should this value be too high a failure is to be assumed and therefore the compressor can be locked-out);
- the ratio between two current values in the running winding 31 measured at different instants (if this ratio is too high it can be associated with a condition of "jammed rotor" or failure, and measurement of this ratio is convenient during starting of the motor/compressor);
- the temperature of the windings or of the compressor or of the outer shell of the compressor or the inner temperature of the compressor; and /or
- the variation rate of the current, the voltage or the temperature of the windings, during running under steady conditions (and preferably for monitoring the quick dynamics of the motor/compressor); and
- any combination of the just listed magnitudes.

Should no failures or anomalies appear, controller 3 allows continuation of the compressor running until for example the thermostat of the refrigerating compartment detects that a sufficient cooling has been reached and cuts power supply; in these cases the controller can provide for a waiting step by setting a predetermined time delay (two minutes, for example) before which the compressor cannot start again; in this way the risks of a condition of "jammed rotor" on restarting of the compressor are reduced.

It is to be noted that a "jammed rotor" condition can be caused by a temporary thermodynamic unbalance of the gas used in the cooling circuit which results in excessive pressure difference across the compressor. In these cases it is necessary to allow the pressure difference to recover by introducing a safety time delay using controller 3 and the switching means to temporarily cut the power supply to windings 30 and/or 31.

In the flow diagram reproduced in Fig. 3 it is possible to see how device 1 can control starting and running of a compressor; depending on the measurements/comparisons done at the different moments (or in other words, depending on the measurements/comparisons alternated with different time delays and so on) possible failure or jamming of the compressor rotor can be verified so that it is possible to act accordingly. There is also the presence, in the algorithm in Fig. 3, of the waiting time intervals 5 and 6 that are practically used to let a certain period of time elapse to allow cooling of the compressor (or stabilisation of the gas in the cooling circuit), if no real failure is present.

The present invention is also capable of optimising the modalities for change of state of the Triac. In fact, it is known that by use of an element of the PTC type to pilot a Triac (that in turn enables or inhibits flowing of a current on the starting winding 30), three different operating moments can be distinguished; a first operating field in which the PTC resistance goes low (and in which the Triac changes its state at a low phase angle, substantially transferring the full electric power from the power line to the starting winding 30); a second operating field in which the resistance quickly grows (and in which the just mentioned phase angle increases so that transfer of electric energy to winding 30 decreases in quantity and is submitted to offsetting in time); a third operating field in which the resistance goes high and the Triac reaches a condition of "switched off".

In any case it is to be noted that the intervention sensitivity of the gate of a Triac is usually different with respect to the supply voltage and/or current signal; due to this sensitivity difference even in the high-resistance operating field of the PTC the Triac is subjected to changes of state (from "open" to "closed" and vice versa, in a permanent manner over a limited period of time).

The just described phenomenon that briefly can be called "half part firing" of the Triac" negatively affects the starting facility of the compressor motors.

In order to eliminate (or at least reduce as much as possible) the "half part firing" phenomenon, the present invention advantageously comprises equalisation means 200 operatively active on the switching means 20 and/or 21; and preferably active on the second ends of the switching means itself; this equalisation means 200 practically minimises the sensitivity variations of a gate in a Triac thereby greatly reducing (and even eliminating) the undesirable "half part firing".

Within the scope of the present invention it was in fact found that a Triac, while having different sensitivities depending on the sign and the phase of the current applied to the gate, is substantially characterised by a ratio between these sensitivities (more specifically, it was found that the ratio between the gate sensitivities at the positive and negative half cycles of the supply current/voltage is substantially constant). Conveniently, the present invention can implement a method minimising the gate sensitivity so as to modify the sensitivity of the gate itself at the positive half cycles of the supply current/voltage making it equal to the gate sensitivity at the negative half cycles of the supply current/voltage.

From a structural point of view, the equalisation means 200 can consist of a suitable circuit branch (to be seen in Fig. 8) having a diode (or an equivalent circuit means) 201 that practically sends to the ground the current directed to the Triac gate at the half cycles in which the gate sensitivity is at its maximum degree.

In addition, it is also possible to detect the presence of resistive elements 202 and/or 203 and/or 204, depending on requirements; in particular it is possible to arrange a resistive element in series with the PTC 205 in order to regulate the energising time of the winding 30 or 31 piloted by the Triac 20 or 21.

Conveniently, an object of the present invention is a compressor, in particular for refrigerating apparatus, comprising a control device 1 having the structure and operating in accordance with the method described above.

Importantly, it will be recognised that in accordance with the present method the characteristic magnitude 110 and/or auxiliary characteristic magnitude and/or main parameter can be electric or thermal magnitudes, or variation rates in time of thermal or electric magnitudes, or ratios between thermal or electric magnitudes measured at time instants in succession, or ratios between thermal or electric magnitudes measured in the starting winding 30 and/or the running winding 31 and electric or thermal reference magnitudes, depending on the specific requirements.

The invention achieves important advantages over the prior art.

First of all, it is to be pointed out that the construction architecture of the present control unit brings about an important simplification and minimisation of moving mechanical parts.

In addition the present control unit can be programmed so as to carry out different control strategies or even to combine or select one or more operating modalities in an adaptable manner depending on the specific requirements.

In other words, the control unit for compressors in accordance with the present invention can minimise power consumption both during the starting and the running phases.

The control unit for compressors in accordance with the present invention can also be provided with a control system of the starting step operating at very low energy consumption, above all during the step in which the compressor works under steady conditions.

In addition, the present control unit can be used to directly detect temperature increases in the compressor, which is advantageous in terms of adaptability and overall safety in operation.

In terms of adaptability of the present unit it is also to be pointed out that it can be programmed so that it can be used with a wide range of motors/compressors having different features.

In addition, it will be appreciated that, due to the structure of the present invention, the overload-control and power-control functions can be integrated into a single device, which is very advantageous as regards manufacturing costs, construction simplicity and reliability.

## Claims

1. A controller device adapted to regulate the starting and running of an induction motor, said induction motor being preferably a motor of a compressor in a refrigerating apparatus, said controller device comprising:
- a controller element (3) to be activated on a motor of a compressor to regulate starting and running of same; and
- switching means (20, 21) operatively connected with said controller element (3) and susceptible of being controlled to allow and stop a current flow to a starting winding (30) and/or to a running winding (31) respectively, of said induction motor,
**Characterised in that** it further comprises:
- a voltage or current generator (41) connected with the starting winding (30) and/or the running winding (31) so as to apply a predetermined single-pulse disturbance voltage or current thereto;
- a detecting block (40) comprising a current or voltage reading unit active on the starting winding (30) and/or the running winding (31) adapted to read the current through and/or the voltage across the starting winding (30) and/or the running winding (31) at the application of said predetermined single-pulse disturbance voltage and/or said predetermined single-pulse disturbance current, respectively;
- a a memory (50) adapted to contain a predetermined number of reference values; and
- a processing unit (60) connected with said detecting block (40) and said memory (50) and suitable:
- to process said single-pulse disturbance voltage or current, preferably having a non-zero average value, and said read current or voltage so as to obtain a corresponding main parameter, said main parameter being a thermal or electric parameter of the starting winding (30) and/or the running winding (31);
- to compare the main parameter with at least one of said reference values contained in the memory (50); and
- to generate a control signal (100) towards the switching means (20, 21) depending on said comparison.

2. A device as claimed in claim 1, **characterised in that** said main parameter of the compressor is of the electric type and is an electric parameter of a starting winding (30) and/or a running winding (31) of the motor and/or the compressor, said characteristic magnitude (110) being a characteristic magnitude of said starting (30) and/or running (31) winding.

3. A device as claimed in claim 2, **characterised in that** said characteristic magnitude (110) is a current flowing through the starting winding (30) and/or the running winding (31), or a voltage at the ends of the starting winding (30) and/or the running winding (31), or a current or voltage variation rate through said windings, or a ratio of voltages or currents measured at time instants in succession.

4. A device as claimed in anyone of the preceding claims, **characterised in that** said main parameter is an electric resistance, said processing unit (60) being able to calculate the electric resistance of the starting winding (30) and/or the running winding (31), depending at least on the voltage or current read by the reading unit and on the current or voltage detected in the starting winding (30) and/or the running winding (31).

5. A device as claimed in claim 1, **characterised in that** said voltage or current generator (41) is set to supply said predetermined single-pulse disturbance voltage or current to the starting winding (30) and/or the running winding (31) at predetermined time intervals to be defined by the processing unit (60).

6. A device as claimed in claim 5, **characterised in that** a single-pulse disturbance voltage or current generated by the generator (41) has a non-zero average value over a predetermined time space.

7. A device as claimed in claim 6, **characterised in that** the single-pulse disturbance voltage/current is obtained through activation of the switching means (20, 21) close to the end of the negative half cycle of a current/voltage in the windings (30 and/or 31), the switching means (20, 21) being set in a conductivity state until the current/voltage through the switching means drops below a threshold level.

8. A device as claimed in claim 6, **characterised in that** the single-pulse disturbance voltage/current is obtained through activation of the switching means (20, 21) after the current/voltage in the windings (30 and/or 31) has reached a negative value, and subsequently through new activation after about one half cycle of the same current/voltage in the windings themselves.

9. A device as claimed in claim 6, **characterised in that** the single-pulse disturbance voltage/current is obtained by maintaining the switching means (20, 21) in a conducting state over all cycles of the resultant supply current/voltage in the windings (30 and/or 31), except for a part of one half cycle during which the resultant current/voltage would have a negative value.

10. A device as claimed in claim 6, **characterised in that** the single-pulse disturbance voltage/current is obtained by maintaining the switching means (20, 21) in a conducting state over all cycles of the current/voltage in the windings (30 and/or 31), except for a half cycle during which the resultant current/voltage would have a negative value.

11. A device as claimed in anyone of the preceding claims, **characterised in that** said processing unit (60) is further able to verify whether the electric resistance calculated by the processing unit (60) is higher than said reference value and to correspondingly generate said control signal (100).

12. A device as claimed in anyone of the preceding claims, **characterised in that** the detecting block (40) is further arranged to detect at least one auxiliary characteristic magnitude of the compressor, preferably at a compressor winding, and more preferably at a starting winding (30) of the compressor, said processing unit (60) being further adapted:
- to process the auxiliary characteristic magnitude read from the detecting block (40) to obtain the predetermined reference value;
- to store said predetermined reference value on the memory (50).

13. A device as claimed in anyone of the preceding claims, **characterised in that** said switching means (20, 21) is associated in circuit with at least the controller element (3) and is drivable by the latter between a first operating condition at which flowing of a supply current to the starting winding (30) and/or running winding (31) is enabled, and a second operating condition at which flowing of said supply current to the starting winding (30) and/or the running winding (31) is inhibited.

14. A device as claimed in claim 13, **characterised in that** each of said switching means (20, 21) has a first end to be connected with an end of the starting winding (30) or the running winding (31) and a second end arranged to receive the control signal (100), said control signal (100) causing the switching means (20, 21) to go between the first and second operating conditions.

15. A device as claimed in claim 14, **characterised in that** said switching means (20, 21) comprises at least one semiconductor element.

16. A device as claimed in claim 15, **characterised in that** said semiconductor element is a triac, said second ends being a gate of said triac.

17. A device as claimed in anyone of the preceding claims, **characterised in that** it further comprises at least one thermal sensor (70) operatively connected with the controller element (3) to determine a temperature, preferably a temperature of the compressor and/or the motor, or a temperature of a housing shell of the motor and/or the compressor, or an inner temperature of the motor and/or the compressor, said thermal sensor (70) being operatively active on the controller unit (3) to determine activation of same depending on predetermined temperature values.

18. A device as claimed in anyone of the preceding claims, **characterised in that** it further comprises a thermosensitive element associable with the starting winding (30) and/or the running winding (31), said thermosensitive element being operatively active on the switching means (20, 21) to send the latter a command signal and to determine the operating conditions thereof.

19. A device as claimed in claim 18, **characterised in that** the thermosensitive element is a thermistor, said command signal being a current passing through the thermistor.

20. A device as claimed in anyone of the preceding claims, **characterised in that** it further comprises a capacitive element (80) to be interposed in circuit between the starting winding (30) and the running winding (31) of the compressor.

21. A device as claimed in anyone of the preceding claims, **characterised in that** it comprises an auxiliary starting unit associable with compressor or induction motors preferably provided with at least one capacitive element active between the windings thereof, said auxiliary starting unit comprising:
- a resistive semiconductor element;
- a switching element connected to said resistive semiconductor element, preferably a triac; and
- an inductive element associated in circuit with the resistive semiconductor element and/or the switching element in order to limit a growth rate of a current through the switching element itself.

22. A device as claimed in anyone of the preceding claims, **characterised in that** it further comprises an auxiliary impedance to be connected in circuit with the starting winding (30).

23. A device as claimed in anyone of the preceding claims, **characterised in that** it further comprises an auxiliary timing unit connected in circuit at least with the controller (3) to set a predetermined synchronism and/or a given clock frequency thereto.

24. A device as claimed in anyone of the preceding claims, **characterised in that** it further comprises safety means (90) operatively associated with the controller (3) and/or the switching means (20, 21) and/or to be interposed in circuit between the windings (30, 31), said safety means (90) preferably comprising switches and/or triacs and/or fuses.

25. A device as claimed in anyone of the preceding claims, **characterised in that** it further comprises equalization means (200) operatively active on the switching means (20, 21) and preferably active on the second ends of said switching means to minimize sensitivity variations of same.

26. A device as claimed in claim 25, **characterised in that** said equalization means (200) comprises a circuit branch having a diode (201) such disposed as to send to the ground the current directed to a gate of a Triac at half cycles of a supply current/voltage in which the sensitivity of said gate is to a maximum degree.

27. A device as claimed in claim 25 or 26, **characterised in that** the equalization means (200) further comprises resistive elements (202 and/or 203 and/or 204), at least one of said resistive elements (202 and/or 203 and/or 204) being put in series to a PTC to regulate a firing time of the winding (30 or 31) piloted by the Triac (20 or 21).

28. A method of controlling starting and/or running of an induction motor having a starting winding (30) and a running winding (31) of a compressor, in particular a compressor for refrigerating apparatus, comprising, during starting of the compressor and/or during running of the compressor, the following steps:
- detecting a characteristic magnitude (110) of the motor or the compressor; and
- processing said characteristic magnitude (110) so as to obtain a corresponding main parameter, said main parameter being a thermal or electric parameter of a starting winding (30) and/or a running winding (31), said processing step comprising the following sub-steps:
- comparing said main parameter with at least one predetermined pre-stored reference value; and
- generating a control signal (100) depending on the result of said comparison,
**characterised in that** the processing step further comprises the following sub-steps:
- applying a predetermined single-pulse disturbance voltage or current, preferably having non-zero average value, to the starting winding (30) and/or the running winding (31); and
- reading the current through and/or voltage across the starting winding (30) and/or the running winding (31), at the application of said predetermined single-pulse disturbance voltage and/or said predetermined single-pulse disturbance current, respectively.
- calculating said main parameter depending on the single-pulse disturbance voltage and/or current preferably having a non-zero value and the read current or voltage.

29. A method as claimed in claim 28, **characterised in that** said detecting, processing, comparing and generating steps are carried out in sequence first for the starting stage and then for the running stage.

30. A method as claimed in claim 28 or 29, **characterised in that** it comprises a step of selectively determining the windings to be energized during the starting stage and/or the running stage.

31. A method as claimed in claim 30, **characterised in that** said selectively-determining step comprises:
- a sub-step of selecting both windings (30 and 31) at least at the beginning of the starting stage; and
- a sub-step of excluding the starting winding (30) at the end of the starting stage itself, only the running winding (31) carrying the current during the running stage following said exclusion sub-step.

32. A method as claimed in anyone of the preceding claims from 28 to 31, **characterised in that** it comprises a step of selectively choosing at least one first control strategy and one second control strategy depending on the operating conditions of the motor and/or the compressor, said first control strategy being selected during starting of the motor and/or the compressor, said second control strategy being selected when the motor and/or the compressor is working under steady conditions.

33. A method as claimed in anyone of the preceding claims from 28 to 32, **characterised in that** it comprises a step of directly measuring currents/voltages in the windings (30 and/or 31) and a subsequent step of processing said control signal (100) by comparing a current/voltage value detected in the starting winding (30) and/or the running winding (31) with predetermined reference values, said directly-measuring and comparing steps being performed during the starting stage of a compressor.

34. A method as claimed in anyone of the preceding claims from 28 to 33, **characterised in that** said characteristic magnitude (110) of the compressor is a characteristic magnitude of a winding, said characteristic being an electric or thermal magnitude of the starting winding (30) and/or the running winding (31).

35. A method as claimed in claim 28, **characterised in that** said applying and reading steps take place in a sequence preferably during running of the motor and/or the compressor, a predetermined number of sequences for applying the single-pulse disturbance current/voltage and reading the current/voltage being preferably repeated at predetermined time intervals or delays.

36. A method as claimed in claim 28, **characterised in that** said sub-step of applying the voltage or current contemplates use of a single-pulse disturbance voltage or a single-pulse disturbance current having a non-zero average value within a predetermined time space of the compressor operation.

37. A method as claimed in anyone of the preceding claims from 28 to 36, **characterised in that** said processing step comprises a sub-step of calculating an equivalent resistance parameter in direct current, the motor and/or the compressor being powered with a supply voltage or current that is variable in time and preferably an alternating supply current or voltage at a predetermined frequency

38. A method as claimed in claim 37, **characterised in that** said direct-current equivalent resistance parameter is a resistance of the starting winding (30) and/or the running winding (31) calculated at least depending on said predetermined single-pulse disturbance voltage and/or single-pulse disturbance current applied to the windings (30 and/or 31).

39. A method as claimed in claim 37, **characterised in that** said calculating sub-step comprises:
- a step of integrating a resultant voltage and/or current into the starting winding (30) and/or the running winding (31) following application of said single-pulse disturbance current and/or single-pulse disturbance voltage; and
- a step of isolating a direct current and/or voltage value starting from said integrating step.

40. A method as claimed in claim 37, **characterised in that** said calculating sub-step comprises:
- a step of calculating an average value of a resultant voltage and/or current in the starting winding (30) and/or the running winding (31) following application of said single-pulse disturbance current and/or said single-pulse disturbance voltage; and
- a step of isolating a direct current and/or voltage value starting from said step of calculating the average value.

41. A method as claimed in anyone of the preceding claims from 28 to 40, **characterised in that** said comparing step comprises a sub-step of verifying whether the calculated resistance is higher than a predetermined pre-stored reference value.

42. A method as claimed in anyone of claims from 28 to 41, **characterised in that** said predetermined reference value is obtained through a step of preliminary acquisition, preferably performed prior to said step of detecting the characteristic magnitude (110) of the compressor, said preliminary-acquisition step comprising the following sub-steps:
- detecting an auxiliary characteristic magnitude of the compressor, preferably at a compressor winding, and more preferably at a starting winding (30) of the compressor;
- processing said auxiliary characteristic magnitude, to obtain said predetermined reference value; and
- storing said predetermined reference value in a memory (50).

43. A method as claimed in anyone of claims from 28 to 42, **characterised in that** it is cyclically applied during working of an induction motor or a compressor.

44. A method as claimed in anyone of claims from 28 to 43, **characterised in that** it further comprises a step of activating a controller (3) depending on an external signal, said controller (3) substantially carrying out the control method, and said external signal being preferably a temperature signal and more preferably being linked to a cooling request from a refrigerating compartment.

45. A method as claimed in anyone of the preceding claims from 28 to 44, **characterised in that** the characteristic magnitude (110) and/or the auxiliary characteristic magnitude and/or the main parameter are electric or thermal magnitudes, or variation rates in time of thermal or electric magnitudes, or ratios between thermal or electric magnitudes measured at time instants in succession, or ratios between thermal or electric magnitudes measured in the starting winding (30) and/or the running winding (31) and thermal or electric reference magnitudes.

46. A method as claimed in anyone of the preceding claims from 28 to 45, **characterised in that** it further comprises a step of minimizing a sensitivity of the gate of a triac (20, 21) said minimizing step preferably comprising a sub-step of modifying said sensitivity of said gate at positive half cycles of the supply current/voltage and more preferably a sub-step in which said sensitivity is made equal to a maximum sensitivity of the gate.

47. A method as claimed in anyone of the preceding claims from 28 to 46, **characterised in that** it further comprises a step of temporarily and preferably in a voluntary manner de-energizing a winding (30 and/or 31), said temporary de-energizing step more preferably preceding the step of applying said single-pulse disturbance current/voltage.

48. A method as claimed in claim 47, **characterised in that** it comprises the following cyclical sub-steps:
- determining at least one time interval in the motor/compressor operation, in which at least one winding (30 and/or 31) is energized;
- stopping current/voltage supply to the winding (30 and/or 31) on expiry of the above mentioned operation interval;
- applying the single-pulse disturbance current/voltage and consequently calculating the winding (30 and/or 31) temperature; and
- generating suitable control signals for the motor/compressor depending on the measured temperature.

49. A method as claimed in claims 47 and/or 48, **characterised in that** it further comprises a step of dynamically varying said operation interval.

50. A method as claimed in claims 47 and/or 48 and/or 49, **characterised in that** it comprises the following cyclical sub-steps:
- under conditions of "de-energized motor/compressor", carrying out a measurement of a reference value, preferably by applying a single-pulse disturbance current/voltage to the winding (30 and/or 31) and then calculating a reference resistance and, consequently, a reference temperature;
- temporarily and preferably in a voluntary manner de-energizing the winding (30 and/or 31);
- applying the single-pulse disturbance voltage/current and consequently calculating the winding (30 and/or 31) temperature;
- correcting the measured temperature by an appropriate correction factor, depending on a temperature sub-range to which the carried out measurement belongs, said temperature range being preferably included in a maximum admissible temperature range for the motor/compressor; and
- generating suitable control signals for the motor/compressor depending on the measured and corrected temperature.

51. A compressor, in particular for refrigerating apparatus, **characterised in that** it comprises a control device (1) as claimed in anyone of the preceding claims 1 to 27.

52. A compressor, in particular for refrigerating apparatus, **characterised in that** it comprises a control device (1) operating in accordance with the method as claimed in anyone of claims from 28 to 50.

## Patentansprüche

1. Steuergerät, ausgelegt für die Steuerung des Starts und Betriebs eines Induktionsmotors, wobei es sich bei diesem Induktionsmotor vorzugsweise um einen Motor eines Kompressors eines kältetechnischen Apparats handelt, das Steuergerät umfassend:
- ein Steuerelement (3), das auf einem Motor eines Kompressors aktiviert wird, um dessen Starten und Betrieb zu steuern, und
- Umschaltelemente (20, 21), die betriebswirksam mit diesem Steuerelement (3) verbunden sind und gesteuert werden können, um einen Stromfluss jeweils zu einer Startwicklung (30) und/oder einer Betriebswicklung (31) dieses Induktionsmotors zu ermöglichen und zu stoppen, **dadurch gekennzeichnet, dass** es zudem umfasst:
- einen Spannungs- oder Stromerzeuger (41), verbunden mit der Startwicklung (30) und/oder der Betriebswicklung (31), sodass eine/ein vorgegebene/r Einzelpulsstörspannung oder -strom daran angelegt wird;
- ein Erfassungsblock (40), umfassend eine Strom- oder Spannungsmesseinheit, aktiv auf der Startwicklung (30) und/oder der Betriebswicklung (31), ausgelegt, um den Strom und/oder die Spannung durch die Startwicklung (30) und/oder die Betriebswicklung (31) jeweils beim Anlegen der vorgegebenen Einzelpulsstörspannung und/oder des vorgegebenen Einzelpulsstörstroms zu messen;
- einen Speicher (50), ausgelegt, um eine vorgegebene Zahl an Referenzwerten zu enthalten, und
- eine Verarbeitungseinheit (60), verbunden mit diesem Erfassungsblock (40) und dem Speicher (50), und geeignet:
- um die/den genannte/n Einzelpulsstörspannung oder - strom, vorzugsweise aufweisend einen Mittelwert nicht gleich null, und den/die gemessene/n Strom oder Spannung zu verarbeiten, um einen entsprechenden Hauptparameter zu erhalten, wobei es sich bei diesem Hauptparameter um einen thermischen oder elektrischen Parameter der Startwicklung (30) und/oder der Betriebswicklung (31) handelt;
- um den Hauptparameter mit mindestens einem der Referenzwerte, die im Speicher (50) enthalten sind, zu vergleichen, und
- um ein Steuersignal (100) zu den Umschaltmitteln (20, 21) zu generieren, abhängig von diesem Vergleich.

2. Gerät nach Anspruch 1, **dadurch gekennzeichnet, dass** der Hauptparameter des Kompressors von elektrischer Art ist und es sich um einen elektrischen Parameter einer Startwicklung (30) und/oder einer Betriebswicklung (31) des Motors und/oder des Kompressors handelt, wobei es sich bei der charakteristischen Magnitude (110) um eine charakteristische Magnitude der Startwicklung (30) und/oder der Betriebswicklung (31) handelt.

3. Gerät nach Anspruch 2, **dadurch gekennzeichnet, dass** es sich bei dieser charakteristischen Magnitude (110) um einen Stromfluss durch die Startwicklung (30) und/oder die Betriebswicklung (31) oder eine Spannung an den Enden der Startwicklung (30) und/oder der Betriebswicklung (31) oder eine Strom- oder Spannungsänderungsrate durch diese Wicklungen oder ein Verhältnis von Spannungen oder Strömen, gemessen an aufeinanderfolgenden Zeitpunkten, handelt.

4. Gerät nach einem der vorhergehenden Ansprüche, **dadurch gekennzeichnet, dass** es sich beim Hauptparameter um einen elektrischen Widerstand handelt, die Verarbeitungseinheit (60) in der Lage ist, den elektrischen Widerstand der Startwicklung (30) und/oder der Betriebswicklung (31) zu berechnen, abhängig mindestens von der Spannung oder dem Strom, die/der von der Messeinheit gemessen wird, und vom Strom oder der Spannung, der/die in der Startwicklung (30) und/oder in der Betriebswicklung (31) erfasst wird.

5. Gerät nach Anspruch 1, **dadurch gekennzeichnet, dass** der Spannungs- oder Stromerzeuger (41) eingestellt ist, um die Startwicklung (30) und/oder die Betriebswicklung (31) in vorgegebenen Zeitabständen, die von der Verarbeitungseinheit (60) definiert werden, mit dieser/diesem vorgegebenen Einzelpulsstörspannung oder -strom zu versorgen.

6. Gerät nach Anspruch 5, **dadurch gekennzeichnet, dass** ein/e Einzelpulsstörspannung oder -strom, erzeugt vom Generator (41), über einen vorgegebenen Zeitraum einen Mittelwert nicht gleich null aufweist.

7. Gerät nach Anspruch 6, **dadurch gekennzeichnet, dass** die/der Einzelpulsstörspannung/-strom durch die Aktivierung der Umschaltmittel (20, 21) nahe am Ende des negativen Halbzyklus eines Stroms/einer Spannung in den Wicklungen (30 und/oder 31) erhalten wird, wobei die Umschaltmittel (20, 21) in einem Leitfähigkeitsstadium eingestellt sind, bis die Spannung/der Strom durch die Umschaltmittel unter einen Schwellenwert sinkt.

8. Gerät nach Anspruch 6, **dadurch gekennzeichnet, dass** die/der Einzelpulsstörspannung/-strom durch die Aktivierung der Umschaltmittel (20, 21) erreicht wird, nachdem der Strom/die Spannung in den Wicklungen (30 und/oder 31) einen negativen Wert erzielt hat, und anschließend durch die neue Aktivierung nach zirka einem halben Zyklus desselben Stroms/derselben Spannung in den Wicklungen.

9. Gerät nach Anspruch 6, **dadurch gekennzeichnet, dass** die/der Einzelpulsstörspannung/-strom dadurch erzielt wird, dass die Umschaltmittel (20, 21) während aller Zyklen des/der entsprechenden Versorgungsstroms/- spannung in den Wicklungen (30 und/oder 31) in einem Leitfähigkeitsstadium beibehalten werden, mit Ausnahme eines Teils eines halben Zyklus, in dem der/die entsprechende Strom/Spannung einen negativen Wert hat.

10. Gerät nach Anspruch 6, **dadurch gekennzeichnet, dass** die/der Einzelpulsstörspannung/-strom dadurch erzielt wird, dass die Umschaltmittel (20, 21) während aller Zyklen des Stroms/der Spannung in den Wicklungen (30 und/oder 31) in einem Leitfähigkeitsstadium beibehalten werden, mit Ausnahme eines halben Zyklus, in dem der/die entsprechende Strom/Spannung einen negativen Wert hat.

11. Gerät nach einem der vorhergehenden Ansprüche, **dadurch gekennzeichnet, dass** die Verarbeitungseinheit (60) außerdem in der Lage ist, zu prüfen, ob der von der Verarbeitungseinheit (60) berechnete elektrische Widerstand höher ist als der Referenzwert, und entsprechend das Steuersignal (100) zu generieren.

12. Gerät nach einem der vorhergehenden Ansprüche, **dadurch gekennzeichnet, dass** der Erfassungsblock (40) zudem so angeordnet ist, dass er mindestens eine zusätzliche charakteristische Magnitude des Kompressors erfasst, vorzugsweise an einer Kompressorwicklung und noch besser an einer Startwicklung (30) des Kompressors, wobei die Verarbeitungseinheit (60) zudem ausgelegt ist:
- um die zusätzliche, vom Erfassungsblock (40) gemessene charakteristische Magnitude zu verarbeiten, um den vorgegebenen Referenzwert zu erhalten;
- um den vorgegebenen Referenzwert im Speicher (50) zu speichern.

13. Gerät nach einem der vorhergehenden Ansprüche, **dadurch gekennzeichnet, dass** die Umschaltmittel (20, 21) im Kreislauf mit mindestens dem Steuerelement (3) verbunden sind und von diesem zwischen einem ersten Betriebszustand, in dem das Strömen eines Versorgungsstroms zur Startwicklung (30) und/oder Betriebswicklung (31) ermöglicht wird, und einem zweiten Betriebszustand, in dem das Strömen dieses Versorgungsstroms zur Startwicklung (30) und/oder Betriebswicklung (31) gehemmt wird, angetrieben werden können.

14. Gerät nach Anspruch 13, **dadurch gekennzeichnet, dass** jedes der Umschaltelemente (20, 21) ein erstes Ende besitzt, um an ein Ende der Startwicklung (30) oder der Betriebswicklung (31) angeschlossen zu werden, und ein zweites Ende, das angeordnet ist, um das Steuersignal (100) zu empfangen, wobei das Steuersignal (100) die Umschaltmittel (20, 21) dazu veranlasst, zwischen dem ersten und dem zweiten Betriebszustand umzuschalten.

15. Gerät nach Anspruch 14, **dadurch gekennzeichnet, dass** die Umschaltmittel (20, 21) mindestens ein Haltleiterelement umfassen.

16. Gerät nach Anspruch 15, **dadurch gekennzeichnet, dass** es sich beim Halbleiterelement um einen Triac handelt, wobei die zweiten Enden ein Ausgang des Triacs sind.

17. Gerät nach einem der vorhergehenden Ansprüche, **dadurch gekennzeichnet, dass** es zudem mindestens einen Thermosensor (70) umfasst, der betriebswirksam mit dem Steuerelement (3) verbunden ist, um eine Temperatur festzulegen, wobei es sich vorzugsweise um eine Temperatur des Kompressors und/oder des Motors oder um eine Temperatur eines Gehäuses des Motors und/oder des Kompressors oder eine interne Temperatur des Motors und/oder des Kompressors handelt, wobei der Thermosensor (70) betriebswirksam auf die Steuereinheit (3) wirkt, um deren Aktivierung abhängig von den vorgegebenen Temperaturwerten zu bewirken.

18. Gerät nach einem der vorhergehenden Ansprüche, **dadurch gekennzeichnet, dass** es zudem ein wärmeempfindliches Element umfasst, das mit der Startwicklung (30) und/oder der Betriebswicklung (31) verbunden werden kann, wobei das wärmeempfindliche Element betriebswirksam auf den Umschaltmitteln (20, 21) aktiv ist, um diesen ein Befehlssignal zu senden und deren Betriebszustand zu bewirken.

19. Gerät nach Anspruch 18, **dadurch gekennzeichnet, dass** das wärmeempfindliche Element ein Thermistor ist, wobei es sich beim Befehlssignal um einen Strom handelt, der durch den Thermistor strömt.

20. Gerät nach einem der vorhergehenden Ansprüche, **dadurch gekennzeichnet, dass** es zudem ein kapazitives Element (80) umfasst, das im Kreislauf zwischen der Startwicklung (30) und der Betriebswicklung (31) des Kompressors eingesetzt wird.

21. Gerät nach einem der vorhergehenden Ansprüche, **dadurch gekennzeichnet, dass** es eine zusätzliche Starteinheit umfasst, die mit dem Kompressor oder Induktionsmotoren verbunden werden kann, vorzugsweise versehen mit mindestens einem kapazitiven Element, das auf dessen Wicklungen aktiv ist, wobei die zusätzliche Starteinheit umfasst:
- ein resistives Halbleiterelement;
- ein Umschaltelement, verbunden mit diesem resistiven Halbleiterelement, vorzugsweise ein Triac, und
- ein Induktionselement, verbunden im Kreislauf mit dem resistiven Halbleiterelement und/oder dem Umschaltelement, um eine Wachstumsrate eines Stroms durch das Umschaltelement zu begrenzen.

22. Gerät nach einem der vorhergehenden Ansprüche, **dadurch gekennzeichnet, dass** es zudem eine Hilfsimpedanz umfasst, die im Kreislauf an die Startwicklung (30) angeschlossen wird.

23. Gerät nach einem der vorhergehenden Ansprüche, **dadurch gekennzeichnet, dass** es zudem eine zusätzliche Zeitmessungseinheit umfasst, die im Kreislauf mindestens mit dem Steuergerät (3) verbunden ist, um einen vorgegebenen Synchronlauf und/oder eine bestimmte Taktfrequenz dafür einzustellen.

24. Gerät nach einem der vorhergehenden Ansprüche, **dadurch gekennzeichnet, dass** es zudem Sicherheitsmittel (90) umfasst, die betriebswirksam mit dem Steuergerät (3) und/oder den Umschaltmitteln (20, 21) verbunden sind und/oder im Kreislauf zwischen den Wicklungen (30, 31) eingesetzt werden, wobei die Sicherheitsmittel (90) vorzugsweise Umschalter und/oder Triacs und/oder Sicherungen umfassen.

25. Gerät nach einem der vorhergehenden Ansprüche, **dadurch gekennzeichnet, dass** es zudem Ausgleichsmittel (200) umfasst, die betriebswirksam auf die Umschaltmittel (20, 21) wirken und vorzugsweise auf die zweiten Enden der Umschaltmittel wirken, um deren Empfindlichkeitsänderungen auf ein Mindestmaß zu reduzieren.

26. Gerät nach Anspruch 25, **dadurch gekennzeichnet, dass** diese Ausgleichsmittel (200) einen Kreislaufabschnitt umfassen, aufweisend eine Diode (201), die so angeordnet ist, dass sie den Strom, der zum Ausgang eines Triacs gerichtet ist, bei halben Zyklen eines Versorgungsstroms/einer Versorgungsspannung, in denen die Empfindlichkeit des Ausgangs auf der maximalen Stufe ist, zur Erde sendet.

27. Gerät nach Anspruch 25 oder 26, **dadurch gekennzeichnet, dass** die Ausgleichsmittel (200) zudem resistive Elemente (202 und/oder 203 und/oder 204) umfassen, wobei mindestens eins dieser resistiven Elemente (202 und/oder 203 und/oder 204) mit einem PTC in Reihe geschaltet wird, um einen Zündverzug der Wicklung (30 oder 31), gesteuert durch den Triac (20 oder 21), zu regulieren.

28. Verfahren zur Steuerung des Starts und/oder Betriebs eines Induktionsmotors, aufweisend eine Startwicklung (30) und eine Betriebswicklung (31) eines Kompressors, insbesondere eines Kompressors für kältetechnische Apparate, umfassend während des Starts des Kompressors und/oder während des Betriebs des Kompressors folgende Schritte:
- Erfassen einer charakteristischen Magnitude (110) des Motors des Kompressors, und
- Verarbeiten dieser charakteristischen Magnitude (110), um einen entsprechenden Hauptparameter zu erhalten, wobei es sich bei diesem Hauptparameter um einen thermischen oder elektrischen Parameter der Startwicklung (30) und/oder der Betriebswicklung (31) handelt, wobei der Verarbeitungsschritt die folgenden Unterschritte umfasst:
- Vergleichen dieses Hauptparameters mit mindestens einem vorgegebenen, bereits gespeicherten Referenzwert, und
- Generieren eines Steuersignals (100), abhängig vom Ergebnis dieses Vergleichs, **dadurch gekennzeichnet, dass** der Verarbeitungsschritt zudem folgende Unterschritte umfasst:
- Anlegen einer/eines vorgegebenen Einzelpulsstörspannung oder -stroms, vorzugsweise aufweisend einen Mittelwert von nicht gleich null, an die Startwicklung (30) und/oder die Betriebswicklung (31), und
- Messen des Strom und/oder der Spannung durch die Startwicklung (30) und/oder die Betriebswicklung (31), jeweils beim Anlegen der vorgegebenen Einzelpulsstörspannung und/oder des vorgegebenen Einzelpulsstörstroms;
- Berechnen des Hauptparameters, abhängig von der Einzelpulsstörspannung und/oder dem -strom, vorzugsweise aufweisend einen Wert nicht gleich null, und der/des gemessenen Spannung oder Stroms.

29. Verfahren nach Anspruch 28, **dadurch gekennzeichnet, dass** diese Schritte des Erfassens, Verarbeitens, Vergleichens und Generierens nacheinander zuerst für die Startphase und dann für die Betriebsphase durchgeführt werden.

30. Verfahren nach Anspruch 28 oder 29, **dadurch gekennzeichnet, dass** es einen Schritt des selektiven Festlegens der während der Startphase und/oder der Betriebsphase zu erregenden Wicklungen umfasst.

31. Verfahren nach Anspruch 30, **dadurch gekennzeichnet, dass** dieser Schritt des selektiven Festlegens umfasst:
- einen Unterschritt zum Auswählen beider Wicklungen (30 und 31) zumindest am Anfang der Startphase, und
- einen Unterschritt des Ausschließens der Startwicklung (30) am Ende der Startphase, wobei nur die Betriebswicklung (31) den Strom während der Betriebsphase, die auf diesen Ausschlussschritt folgt, führt.

32. Verfahren nach einem der vorhergehenden Ansprüche 28 bis 31, **dadurch gekennzeichnet, dass** es einen Schritt zum selektiven Auswählen mindestens einer ersten Steuerungsstrategie und einer zweiten Steuerungsstrategie umfasst, abhängig vom Betriebszustand des Motors und/oder des Kompressors, wobei die erste Steuerungsstrategie während des Startens des Motors und/oder des Kompressors ausgewählt wird und die zweite Steuerungsstrategie ausgewählt wird, wenn der Motor und/oder der Kompressor unter gleichbleibenden Bedingungen arbeitet.

33. Verfahren nach einem der vorhergehenden Ansprüche 28 bis 32, **dadurch gekennzeichnet, dass** es einen Schritt des direkten Messens von Strömen/Spannungen in den Wicklungen (30 und/oder 31) und einen darauffolgenden Schritt des Verarbeitens des Steuersignals (100) durch das Vergleichen eines Strom-/Spannungswerts, erfasst in der Startwicklung (30) und/oder der Betriebswicklung (31), mit vorgegebenen Referenzwerten umfasst, wobei die Schritte des direkten Messens und Vergleichens während der Startphase eines Kompressors durchgeführt werden.

34. Verfahren nach einem der vorhergehenden Ansprüche 28 bis 33, **dadurch gekennzeichnet, dass** die charakteristische Magnitude (110) des Kompressors eine charakteristische Magnitude einer Wicklung ist, wobei es sich bei der charakteristischen Magnitude um eine elektrische oder thermische Magnitude der Startwicklung (30) und/oder der Betriebswicklung (31) handelt.

35. Verfahren nach Anspruch 28, **dadurch gekennzeichnet, dass** die Schritte des Anlegens und Messens in einer Abfolge vorzugsweise während des Betriebs des Motors und/oder des Kompressors stattfinden, wobei eine vorgegebene Zahl an Abfolgen zum Anlegen des/der Einzelpulsstörstroms/-spannung und Messen des Stroms/der Spannung vorzugsweise in vorgegebenen Zeitintervallen oder Verzögerungen wiederholt werden.

36. Verfahren nach Anspruch 28, **dadurch gekennzeichnet, dass** der Unterschritt zum Anlegen der Spannung oder des Stroms die Nutzung einer Einzelpulsstörspannung oder eines Einzelpulsstörstroms beinhaltet, aufweisend einen Mittelwert nicht gleich null, innerhalb eines vorgegebenen Zeitraums des Kompressorbetriebs.

37. Verfahren nach einem der vorhergehenden Ansprüche 28 bis 36, **dadurch gekennzeichnet, dass** der Verarbeitungsschritt einen Unterschritt zum Berechnen eines äquivalenten Gleichstromwiderstandsparameters umfasst, wobei der Motor und/oder der Kompressor mit einer Versorgungsspannung oder einem Versorgungsstrom versorgt wird, die/der zeitlich variabel ist, und bei der/dem es sich vorzugsweise um einen Versorgungswechselstrom oder eine Versorgungswechselspannung bei einer vorgegebenen Frequenz handelt.

38. Verfahren nach Anspruch 37, **dadurch gekennzeichnet, dass** der äquivalente Gleichstromwiderstandsparameter ein Widerstand der Startwicklung (30) und/oder der Betriebswicklung (30) ist, berechnet mindestens abhängig von der/vom vorgegebenen Einzelpulsstörspannung und/oder Einzelpulsstörstrom, angelegt an den Wicklungen (30 und/oder 31).

39. Verfahren nach Anspruch 37, **dadurch gekennzeichnet, dass** der Unterschritt des Berechnens umfasst:
- einen Schritt des Integrierens einer/eines resultierenden Spannung und/oder Stroms in die Startwicklung (30) und/oder die Betriebswicklung (31), folgend dem Anlegen des Einzelpulsstörstroms und/oder der Einzelpulsstörspannung, und
- einen Schritt des Isolierens eines Gleichstroms und/oder einer Gleichspannung, beginnend beim Integrationsschritt.

40. Verfahren nach Anspruch 37, **dadurch gekennzeichnet, dass** der Unterschritt des Berechnens umfasst:
- einen Schritt des Berechnens eines Durchschnittswerts einer/eines resultierenden Spannung und/oder Stroms in der Startwicklung (30) und/oder die Betriebswicklung (31), folgend dem Anlegen des Einzelpulsstörstroms und/oder der Einzelpulsstörspannung, und
- einen Schritt des Isolierens eines Gleichstroms und/oder einer Gleichspannung, beginnend beim Schritt des Berechnens des Durchschnittswerts.

41. Verfahren nach einem der vorhergehenden Ansprüche 28 bis 40, **dadurch gekennzeichnet, dass** der Schritt des Vergleichens einen Unterschritt umfasst, um zu prüfen, ob der berechnete Widerstand höher ist als ein vorgegebener bereits gespeicherter Referenzwert.

42. Verfahren gemäß Anspruch 28 bis 41, **dadurch gekennzeichnet, dass** der vorgegebene Referenzwert durch einen Schritt des vorläufigen Erfassens erhalten wird, vorzugsweise durchgeführt vor dem Schritt des Erfassens der charakteristischen Magnitude (110) des Kompressors, wobei dieser Schritt des vorläufigen Erfassens die folgenden Unterschritte umfasst:
- Erfassen einer zusätzlichen charakteristischen Magnitude des Kompressors, vorzugsweise an einer Kompressorwicklung und noch besser an einer Startwicklung (30) des Kompressors;
- Verarbeiten dieser zusätzlichen charakteristischen Magnitude, um den vorgegebenen Referenzwert zu erhalten und
- Speichern des vorgegebenen Referenzwerts in einem Speicher (50).

43. Verfahren nach einem der Ansprüche 28 bis 42, **dadurch gekennzeichnet, dass** es während des Betriebs eines Induktionsmotors oder eines Kompressors zyklisch angewandt wird.

44. Verfahren nach einem der Ansprüche 28 bis 43, **dadurch gekennzeichnet, dass** es zudem einen Schritt des Aktivierens eines Steuergeräts (3) umfasst, abhängig von einem externen Signal, wobei das Steuergerät (3) im Wesentlichen die Steuermethode durchführt und es sich beim externen Signal vorzugsweise um ein Temperatursignal handelt und dieses noch besser mit einer Kühlanfrage eines Kühlbereichs verknüpft ist.

45. Verfahren nach einem der vorhergehenden Ansprüche 28 bis 44, **dadurch gekennzeichnet, dass** die charakteristische Magnitude (110) und/oder die zusätzliche charakteristische Magnitude und/oder der Hauptparameter elektrische oder thermische Magnituden oder zeitbedingte Variationsraten thermischer oder elektrischer Magnituden oder Verhältnisse zwischen thermischen oder elektrischen Magnituden, gemessen an aufeinanderfolgenden Zeitpunkten, oder Verhältnisse zwischen thermischen oder elektrischen Magnituden, gemessen in der Startwicklung (30) und/oder der Betriebswicklung (31), und thermischen oder elektrischen Referenzmagnituden sind.

46. Verfahren nach einem der vorhergehenden Ansprüche 28 bis 45, **dadurch gekennzeichnet, dass** es zudem einen Schritt des Reduzierens auf ein Mindestmaß einer Empfindlichkeit des Ausgangs eines Triacs (20, 21) umfasst, wobei dieser Schritt des Reduzierens auf ein Mindestmaß vorzugsweise einen Unterschritt des Veränderns dieser Empfindlichkeit dieses Ausgangs bei positiven Halbzyklen des Versorgungsstroms/der Versorgungsspannung und noch besser einen Unterschritt umfasst, bei dem diese Empfindlichkeit mit einer maximalen Empfindlichkeit des Ausgangs gleichgesetzt wird.

47. Verfahren nach einem der vorhergehenden Ansprüche 28 bis 46, **dadurch gekennzeichnet, dass** es zudem einen Schritt des vorübergehenden und vorzugsweise absichtlichen Entregens einer Wicklung (30 und/oder 31) umfasst, wobei der Schritt des vorübergehenden Entregens noch besser vor dem Schritt des Anlegens des/der Einzelpulsstörstroms/-spannung stattfindet.

48. Verfahren nach Anspruch 47, **dadurch gekennzeichnet, dass** es die folgenden zyklischen Unterschritte umfasst:
- Festlegen von mindestens einem Zeitintervall während des Motor-/Kompressorbetriebs, in dem mindestens eine Wicklung (30 und/oder 31) erregt ist;
- Stoppen der Strom-/Spannungsversorgung zur Wicklung (30 und/oder 31) bei Ablauf dieses Betriebsintervalls;
- Anlegen des/der Einzelpulsstörstroms/-spannung und entsprechendes Berechnen der Temperatur der Wicklung (30 und/oder 31) und
- Generieren geeigneter Steuersignale für den Motor/Kompressor, abhängig von der gemessenen Temperatur.

49. Verfahren nach Anspruch 47 und/oder 48, **dadurch gekennzeichnet, dass** es zudem einen Schritt des dynamischen Variierens dieses Betriebsintervalls umfasst.

50. Verfahren nach Anspruch 47 und/oder 48 und/oder 49, **dadurch gekennzeichnet, dass** es zudem folgende zyklische Unterschritte umfasst:
- im Zustand "Motor/Kompressor nicht versorgt" Durchführen einer Messung des Referenzwerts, vorzugsweise durch Anlegen eines/einer Einzelpulsstörstroms/-spannung an die Wicklung (30 und/oder 31) und anschließendes Berechnen eines Referenzwiderstands und entsprechend einer Referenztemperatur;
- vorläufiges und vorzugsweise absichtliches Entregen der Wicklung (30 und/oder 31);
- Anlegen des/der Einzelpulsstörstroms/-spannung und entsprechendes Berechnen der Temperatur der Wicklung (30 und/oder 31);
- Berichtigen der gemessenen Temperatur mittels eines geeigneten Korrekturfaktors, abhängig von einem Temperaturunterbereich, dem die durchgeführten Messungen angehören, wobei dieser Temperaturbereich vorzugsweise in einem maximal zulässigen Temperaturbereich für den Motor/Kompressor eingeschlossen ist, und
- Generieren geeigneter Steuersignale für den Motor/Kompressor, abhängig von der gemessenen und berichtigten Temperatur.

51. Kompressor, insbesondere für kältetechnische Apparate, **dadurch gekennzeichnet, dass** er ein Steuergerät (1) nach einem der vorhergehenden Ansprüche 1 bis 27 umfasst.

52. Kompressor, insbesondere für kältetechnische Apparate, **dadurch gekennzeichnet, dass** er ein Steuergerät (1) umfasst, das gemäß der Methode nach einem der vorhergehenden Ansprüche von 28 bis 50 arbeitet.

## Revendications

1. Dispositif de commande capable de régler le démarrage et le fonctionnement d'un moteur asynchrone, ledit moteur asynchrone étant de préférence un moteur d'un compresseur dans un appareil frigorifique, ledit dispositif de commande comprenant .
- un élément de commande (3) à activer sur un moteur d'un compresseur pour régler son démarrage et son fonctionnement ; et
- des moyens de commutation (20, 21) connectés opérationnellement audit élément de commande (3) et susceptibles d'être commandés pour permettre et interrompre un passage de courant dans un enroulement de démarrage (30) et/ou dans un enroulement de travail (31) respectivement, dudit moteur asynchrone, **caractérisé en ce qu'**il comprend aussi .
- un générateur de tension ou courant (41) connecté à l'enroulement de démarrage (30) et/ou à l'enroulement de travail (31) de sorte à appliquer une tension perturbatrice d'impulsion unique prédéterminée ou un courant perturbateur d'impulsion unique prédéterminé ;
- un bloc détecteur (40) comprenant une unité de lecture de courant ou tension active sur l'enroulement de démarrage (30) et/ou sur l'enroulement de travail (31) capable de lire le courant et/ou la tension traversant l'enroulement de démarrage (30) et/ou l'enroulement de travail (31) lors de l'application de ladite tension perturbatrice d'impulsion unique prédéterminée et/ou dudit courant perturbateur d'impulsion unique prédéterminé, respectivement ;
- une mémoire (50) capable de contenir un nombre prédéterminé de valeurs de référence ; et
- une unité de traitement (60) connectée audit bloc détecteur (40) et à ladite mémoire (50) et pouvant :
- traiter ladite tension perturbatrice d'impulsion unique ou ledit courant perturbateur d'impulsion unique ayant, de préférence, une valeur moyenne non-nulle, et ledit courant ou ladite tension lus de sorte à obtenir un paramètre principal correspondant, ledit paramètre principal étant un paramètre thermique ou électrique de l'enroulement de démarrage (30) et/ou de l'enroulement de travail (31) ;
- comparer le paramètre principal à au moins l'une desdites valeurs de référence contenues dans la mémoire (50) ; et
- émettre un signal de commande (100) vers les moyens de commutation (20, 21) en fonction de ladite comparaison.

2. Dispositif selon la revendication 1, **caractérisé en ce que** ledit paramètre principal du compresseur est du type électrique et est un paramètre électrique d'un enroulement de démarrage (30) et/ou d'un enroulement de travail (31) du moteur et/ou du compresseur, ladite grandeur caractéristique (110) étant une grandeur caractéristique dudit enroulement de démarrage (30) et/ou de travail (31).

3. Dispositif selon la revendication 2, **caractérisé en ce que** ladite grandeur caractéristique (110) est un courant traversant l'enroulement de démarrage (30) et/ou l'enroulement de travail (31), ou une tension aux extrémités de l'enroulement de démarrage (30) et/ou de l'enroulement de travail (31), ou un taux de variation du courant ou de la tension traversant lesdits enroulements, ou un taux des tensions ou courants mesurés à la suite à des instants dans le temps.

4. Dispositif selon l'une quelconque des revendications précédentes, **caractérisé en ce que** ledit paramètre principal est une résistance électrique, ladite unité de traitement (60) pouvant calculer la résistance électrique de l'enroulement de démarrage (30) et/ou de l'enroulement de travail (31), en fonction au moins de la tension ou du courant lus par l'unité de lecture et du courant ou de la tension détectés dans l'enroulement de démarrage (30) et/ou l'enroulement de travail (31).

5. Dispositif selon la revendication 1, **caractérisé en ce que** ledit générateur de tension ou courant (41) est configuré pour fournir ladite tension perturbatrice d'impulsion unique prédéterminée ou ledit courant perturbateur d'impulsion unique prédéterminé à l'enroulement de démarrage (30) et/ou à l'enroulement de travail (31) à des intervalles de temps prédéterminés qui sont définis par l'unité de traitement (60).

6. Dispositif selon la revendication 5, **caractérisé en ce qu'**une tension perturbatrice d'impulsion unique ou un courant perturbateur d'impulsion unique générés par le générateur (41) présentent une valeur moyenne non-nulle dans un espace-temps prédéterminé.

7. Dispositif selon la revendication 6, **caractérisé en ce que** la tension perturbatrice/le courant perturbateur d'impulsion unique est obtenue/obtenu par l'activation des moyens de commutation (20, 21) près de la fin de la demi-période négative d'un courant/d'une tension dans les enroulements (30 et/ou 31), les moyens de commutation (20, 21) étant mis dans un état conducteur jusqu'à ce que le courant/la tension traversant les moyens de commutation chute sous un niveau seuil.

8. Dispositif selon la revendication 6, **caractérisé en ce que** la tension perturbatrice/le courant perturbateur d'impulsion unique est obtenue/obtenu par l'activation des moyens de commutation (20, 21) après que le courant/la tension dans les enroulements (30 et/ou 31) a atteint une valeur négative, et par la suite par une nouvelle activation après environ une demi-période dudit courant/de ladite tension dans les enroulements.

9. Dispositif selon la revendication 6, **caractérisé en ce que** la tension perturbatrice/le courant perturbateur d'impulsion unique est obtenue/obtenu en conservant les moyens de commutation (20, 21) dans un état conducteur dans toutes les périodes du courant/de la tension d'alimentation résultants dans les enroulements (30 et/ou 31), à l'exception d'une partie d'une demi-période pendant laquelle le courant/la tension résultants a une valeur négative.

10. Dispositif selon la revendication 6, **caractérisé en ce que** la tension perturbatrice/le courant perturbateur d'impulsion unique est obtenue/obtenu en conservant les moyens de commutation (20, 21) dans un état conducteur dans toutes les périodes du courant/de la tension dans les enroulements (30 et/ou 31), à l'exception d'une demi-période pendant laquelle le courant/la tension résultants a une valeur négative.

11. Dispositif selon l'une quelconque des revendications précédentes, **caractérisé en ce que** ladite unité de traitement (60) peut également vérifier si la résistance électrique calculée par l'unité de traitement (60) est supérieure à ladite valeur de référence et émettre ledit signal de commande (100) en conséquence.

12. Dispositif selon l'une quelconque des revendications précédentes, **caractérisé en ce que** le bloc détecteur (40) est aussi configuré pour détecter au moins une grandeur caractéristique auxiliaire du compresseur, de préférence sur un enroulement du compresseur, et plus de préférence encore sur un enroulement de démarrage (30) du compresseur, ladite unité de traitement (60) pouvant également :
- traiter la grandeur caractéristique auxiliaire lue par le bloc détecteur (40) pour obtenir la valeur de référence prédéterminée ;
- enregistrer ladite valeur de référence prédéterminée dans la mémoire (50).

13. Dispositif selon l'une quelconque des revendications précédentes, **caractérisé en ce que** lesdits moyens de commutation (20, 21) sont associés en circuit au moins à l'élément de commande (3) et peuvent être commutés par ce dernier entre une première condition de fonctionnement dans laquelle est activé le passage d'un courant d'alimentation dans l'enroulement de démarrage (30) et/ou l'enroulement de travail (31), et une seconde condition de fonctionnement dans laquelle est désactivé le passage dudit courant d'alimentation dans l'enroulement de démarrage (30) et/ou l'enroulement de travail (31).

14. Dispositif selon la revendication 13, **caractérisé en ce que** chacun desdits moyens de commutations (20, 21) présente une première extrémité à connecter à une extrémité de l'enroulement de démarrage (30) ou de l'enroulement de travail (31) et une seconde extrémité pouvant recevoir le signal de commande (100), ledit signal de commande (100) poussant les moyens de commutation (20, 21) à commuter entre la première condition de fonctionnement et la seconde condition de fonctionnement.

15. Dispositif selon la revendication 14, **caractérisé en ce que** lesdits moyens de commutation (20, 21) comprennent au moins un élément semi-conducteur.

16. Dispositif selon la revendication 15, **caractérisé en ce que** ledit élément semi-conducteur est un triac, lesdites secondes extrémités étant une porte dudit triac.

17. Dispositif selon l'une quelconque des revendications précédentes, **caractérisé en ce qu'**il comprend aussi au moins un capteur thermique (70) opérationnellement connecté à l'élément de commande (3) pour déterminer une température, de préférence une température du compresseur et/ou du moteur, ou une température d'une coque de carter du moteur et/ou du compresseur, ou une température interne du moteur et/ou du compresseur, ledit capteur thermique (70) étant opérationnellement actif sur l'unité de commande (3) pour déterminer son activation en fonction des valeurs de température prédéterminées.

18. Dispositif selon l'une quelconque des revendications précédentes, **caractérisé en ce qu'**il comprend également un élément thermosensible associable à l'enroulement de démarrage (30) et/ou à l'enroulement de travail (31), ledit élément thermosensible étant opérationnellement actif sur les moyens de commutation (20, 21) pour leur envoyer un signal de commande et pour déterminer leurs conditions de fonctionnement.

19. Dispositif selon la revendication 18, **caractérisé en ce que** l'élément thermosensible est un thermistor, ledit signal de commande étant un courant traversant le thermistor.

20. Dispositif selon l'une quelconque des revendications précédentes, **caractérisé en ce qu'**il comprend également un élément capacitif (80) à interposer en circuit entre l'enroulement de démarrage (30) et l'enroulement de travail (31) du compresseur.

21. Dispositif selon l'une quelconque des revendications précédentes, **caractérisé en ce qu'**il comprend une unité de démarrage auxiliaire associable au compresseur ou aux moteurs asynchrones, de préférence équipée au moins d'un élément capacitif actif entre ses enroulements, ladite unité de démarrage auxiliaire comprenant :
- un élément semi-conducteur résistif ;
- un élément de commutation connecté audit élément semi-conducteur résistif, de préférence un triac ; et
- un élément inductif associé en circuit à l'élément semi-conducteur résistif et/ou à l'élément de commutation afin de limiter un taux de croissance d'un courant traversant ledit élément de commutation.

22. Dispositif selon l'une quelconque des revendications précédentes, **caractérisé en ce qu'**il comprend également une impédance auxiliaire à connecter en circuit à l'enroulement de démarrage (30).

23. Dispositif selon l'une quelconque des revendications précédentes, **caractérisé en ce qu'**il comprend également une unité de temporisation auxiliaire connectée en circuit au moins à l'élément de commande (3) pour définir un synchronisme prédéterminé et/ou une fréquence d'horloge donnée.

24. Dispositif selon l'une quelconque des revendications précédentes, **caractérisé en ce qu'**il comprend également des moyens de sécurité (90) opérationnellement associés à l'élément de commande (3) et/ou aux moyens de commutation (20, 21) et/ou à interposer en circuit entre les enroulements (30, 31), lesdits moyens de sécurité (90) comprenant, de préférence, des commutateurs et/ou des triacs et/ou des fusibles.

25. Dispositif selon l'une quelconque des revendications précédentes, **caractérisé en ce qu'**il comprend également des moyens d'égalisation (200) opérationnellement actifs sur les moyens de commutation (20, 21) et, de préférence, actifs sur les secondes extrémités desdits moyens de commutation pour réduire au minimum leurs variations de sensibilité.

26. Dispositif selon la revendication 25, **caractérisé en ce que** lesdits moyens d'égalisation (200) comprennent une branche de circuit avec une diode (201) pouvant envoyer à la terre le courant dirigé à une porte d'un Triac à des demi-périodes d'un courant/d'une tension d'alimentation pendant lesquelles la sensibilité de ladite porte est à un degré maximum.

27. Dispositif selon les revendications 25 ou 26, **caractérisé en ce que** les moyens d'égalisation (200) comprennent également des éléments résistifs (202 et/ou 203 et/ou 204), au moins l'un desdits éléments résistifs (202 et/ou 203 et/ou 204) étant mis en série à une résistance PTC pour régler une durée d'allumage de l'enroulement (30 ou 31) piloté par le Triac (20 ou 21).

28. Procédé de commande pour le démarrage et/ou le fonctionnement d'un moteur asynchrone ayant un enroulement de démarrage (30) et un enroulement de travail (31) d'un compresseur, en particulier un compresseur pour appareil frigorifique, englobant, pendant le démarrage du compresseur et/ou pendant le fonctionnement du compresseur, les étapes suivantes :
- détecter une grandeur caractéristique (110) du moteur ou du compresseur ; et
- traiter ladite grandeur caractéristique (110) de sorte à obtenir un paramètre principal correspondant, ledit paramètre principal étant un paramètre thermique ou électrique d'un enroulement de démarrage (30) et/ou d'un enroulement de travail (31), ladite étape de traitement comprenant les sous-étapes suivantes :
- comparer ledit paramètre principal à au moins une valeur de référence préenregistrée prédéterminée ; et
- émettre un signal de commande (100) en fonction du résultat de ladite comparaison, **caractérisé en ce que** l'étape de traitement comporte aussi les sous-étapes suivantes :
- appliquer une tension perturbatrice d'impulsion unique prédéterminée ou un courant perturbateur d'impulsion unique prédéterminé, de préférence ayant une valeur moyenne non-nulle, dans l'enroulement de démarrage (30) et/ou l'enroulement de travail (31) ; et
- lire le courant et/ou la tension traversant l'enroulement de démarrage (30) et/ou l'enroulement de travail (31) lors de l'application de ladite tension perturbatrice d'impulsion unique prédéterminée et/ou dudit courant perturbateur d'impulsion unique prédéterminé, respectivement.
- calculer ledit paramètre principal en fonction de la tension perturbatrice d'impulsion unique et/ou du courant perturbateur d'impulsion unique, de préférence ayant une valeur non-nulle, et en fonction du courant ou de la tension lus.

29. Procédé selon la revendication 28, **caractérisé en ce que** lesdites étapes de détection, de traitement, de comparaison et d'émission sont réalisées en séquence, tout d'abord pour la phase de démarrage et puis pour la phase de fonctionnement.

30. Procédé selon les revendications 28 ou 29, **caractérisé en ce qu'**il comprend une étape pour déterminer de façon sélective les enroulement à alimenter pendant la phase de démarrage et/ou la phase de fonctionnement.

31. Procédé selon la revendication 30, **caractérisé en ce que** ladite étape de détermination sélective comprend :
- une sous-étape de sélection des deux enroulements (30 et 31) au moins au début de la phase de démarrage ; et
- une sous-étape d'exclusion de l'enroulement de démarrage (30) à la fin de sa phase de démarrage, l'enroulement de travail (31) uniquement portant le courant pendant la phase de fonctionnement suite à ladite sous-étape d'exclusion.

32. Procédé selon l'une quelconque des revendications précédentes 28 à 31, **caractérisé en ce qu'**il comprend une étape consistant à choisir de façon sélective au moins une première stratégie de commande et une seconde stratégie de commande en fonction des conditions de fonctionnement du moteur et/ou du compresseur, ladite première stratégie de commande étant sélectionnée pendant le démarrage du moteur et/ou du compresseur, ladite seconde stratégie de commande étant sélectionnée quand le moteur et/ou le compresseur fonctionnent dans des conditions soutenues.

33. Procédé selon l'une quelconque des revendications précédentes 28 à 32, **caractérisé en ce qu'**il comprend une étape consistant à mesurer directement des courants/tensions dans les enroulements (30 et/ou 31) et une étape suivante consistant à traiter ledit signal de commande (100) en comparant une valeur de courant/tension détectée dans l'enroulement de démarrage (30) et/ou l'enroulement de travail (31) à des valeurs de référence prédéterminées, lesdites étapes de mesure directe et de comparaison étant réalisées pendant la phase de démarrage d'un compresseur.

34. Procédé selon l'une quelconque des revendications précédentes 28 à 33, **caractérisé en ce que** ladite grandeur caractéristique (110) du compresseur est une grandeur caractéristique d'un enroulement, ladite caractéristique étant une grandeur électrique ou thermique de l'enroulement de démarrage (30) et/ou de l'enroulement de travail (31).

35. Procédé selon la revendication 28, **caractérisé en ce que** lesdites étapes d'application et de lecture se font en une séquence, de préférence pendant le fonctionnement du moteur et/ou du compresseur, un nombre prédéterminé de séquences pour appliquer le courant perturbateur d'impulsion unique/la tension perturbatrice d'impulsion unique et pour lire le courant/la tension étant de préférence répété à des intervalles prédéterminés de temps ou de traversée.

36. Procédé selon la revendication 28, **caractérisé en ce que** ladite sous-étape d'application de la tension ou du courant implique l'utilisation d'une tension perturbatrice d'impulsion unique ou d'un courant perturbateur d'impulsion unique ayant une valeur moyenne non-nulle dans un espace-temps prédéterminé du fonctionnement du compresseur.

37. Procédé selon l'une quelconque des revendications précédentes 28 à 36, **caractérisé en ce que** ladite étape de traitement comprend une sous-étape consistant à calculer un paramètre de résistance équivalente en courant continu, le moteur et/ou le compresseur étant alimentés par une tension ou un courant d'alimentation qui peuvent varier en temps, et de préférence, un courant ou une tension d'alimentation d'alimentation alternatifs à une fréquence prédéterminée.

38. Procédé selon la revendication 37, **caractérisé en ce que** ledit paramètre de résistance équivalente en courant continu est une résistance de l'enroulement de démarrage (30) et/ou de l'enroulement de travail (31) calculée au moins en fonction de ladite tension perturbatrice d'impulsion unique prédéterminée et/ou dudit courant perturbateur d'impulsion unique prédéterminé appliqués aux enroulements (30 et/ou 31).

39. Procédé selon la revendication 37, **caractérisé en ce que** ladite sous-étape de calcul comprend :
- une étage d'intégration d'une tension et/ou d'un courant résultants dans l'enroulement de démarrage (30) et/ou l'enroulement de travail (31) après l'application dudit courant perturbateur d'impulsion unique et/ou de ladite tension perturbatrice d'impulsion unique ; et
- une étape d'isolation d'une valeur de courant et/ou tension continus depuis ladite étape d'intégration.

40. Procédé selon la revendication 37, **caractérisé en ce que** ladite sous-étape de calcul comprend :
- une étape de calcul d'une valeur moyenne d'une tension et/ou d'un courant résultants dans l'enroulement de démarrage (30) et/ou l'enroulement de travail (31) après l'application dudit courant perturbateur d'impulsion unique et/ou de ladite tension perturbatrice d'impulsion unique ; et
- une étape d'isolation d'une valeur de courant et/ou tension continus depuis ladite étape de calcul de la valeur moyenne.

41. Procédé selon l'une quelconque des revendications précédentes 28 à 40, **caractérisé en ce que** ladite étape de comparaison comprend une sous-étape consistant à vérifier si la résistance calculée est supérieure à une valeur de référence préenregistrée prédéterminée.

42. Procédé selon l'une quelconque des revendications 28 à 41, **caractérisé en ce que** ladite valeur de référence prédéterminée est obtenue par une étape d'acquisition préliminaire, de préférence réalisée avant ladite étape de détection de la grandeur caractéristique (110) du compresseur, ladite étape d'acquisition préliminaire comprenant les sous-étapes suivantes :
- détecter une grandeur caractéristique auxiliaire du compresseur, de préférence sur un enroulement du compresseur, et plus de préférence encore sur un enroulement de démarrage (30) du compresseur ;
- traiter ladite grandeur caractéristique auxiliaire pour obtenir ladite valeur de référence prédéterminée ; et
- enregistrer ladite valeur de référence prédéterminée dans une mémoire (50).

43. Procédé selon l'une quelconque des revendications 28 à 42, **caractérisé en ce qu'**il est appliqué cycliquement pendant le fonctionnement d'un moteur asynchrone ou d'un compresseur.

44. Procédé selon l'une quelconque des revendications 28 à 43, **caractérisé en ce qu'**il comprend aussi une étape consistant à activer un élément de commande (3) en fonction d'un signal externe, ledit élément de commande (3) effectuant essentiellement le procédé de commande, et ledit signal externe étant, de préférence, un signal de température, et plus de préférence encore, étant lié à une demande de refroidissement par un compartiment frigorifique.

45. Procédé selon l'une quelconque des revendications précédentes 28 à 44, **caractérisé en ce que** la grandeur caractéristique (110) et/ou la grandeur caractéristique auxiliaire et/ou le paramètre principal sont des grandeurs électriques ou thermiques, ou des taux de variation temporelle de grandeurs thermiques ou électriques, ou des rapports entre les grandeurs thermiques ou électriques mesurées à la suite à des instants dans le temps, ou des rapports entre les grandeurs thermiques ou électriques mesurées dans l'enroulement de démarrage (30) et/ou l'enroulement de travail (31) et les grandeurs de référence thermiques ou électriques.

46. Procédé selon l'une quelconque des revendications précédentes 28 à 45, **caractérisé en ce qu'**il comprend également une étape consistant à réduire au minimum une sensibilité de la porte d'un triac (20, 21), ladite étape de réduction au minimum comprenant, de préférence, une sous-étape consistant à modifier ladite sensibilité de ladite porte à des demi-périodes positives du courant/de la tension d'alimentation, et plus de préférence encore, une sous-étape dans laquelle ladite sensibilité devient égale à une sensibilité maximale de la porte.

47. Procédé selon l'une quelconque des revendications précédentes 28 à 46, **caractérisé en ce qu'**il comprend également une étape consistant à couper l'alimentation provisoirement et, de préférence, volontairement, d'un enroulement (30 et/ou 31), ladite étape de coupure provisoire de l'alimentation, plus de préférence encore, précédant l'étape d'application dudit courant perturbateur/de ladite tension perturbatrice d'impulsion unique.

48. Procédé selon la revendication 47, **caractérisé en ce qu'**il comprend les sous-étapes cycliques suivantes :
- déterminer au moins un intervalle de temps dans le fonctionnement du moteur/du compresseur, auquel au moins un enroulement (30 et/ou 31) est alimenté ;
- interrompre l'alimentation en courant/tension de l'enroulement (30 et/ou 31) au terme de l'intervalle de fonctionnement mentionné ci-dessus ;
- appliquer le courant perturbateur/la tension perturbatrice d'impulsion unique et calculer, en conséquence, la température de l'enroulement (30 et/ou 31) ; et
- émettre des signaux de commande appropriés pour le moteur/compresseur en fonction de la température mesurée.

49. Procédé selon les revendications 47 et/ou 48, **caractérisé en ce qu'**il comprend aussi une étape consistant à varier dynamiquement ledit intervalle de fonctionnement.

50. Procédé selon les revendications 47 et/ou 48 et/ou 49, **caractérisé en ce qu'**il comprend les sous-étapes cycliques suivantes :
- dans des conditions de « coupure de l'alimentation du moteur/compresseur », mesurer une valeur de référence, de préférence en appliquant un courant perturbateur/une tension perturbatrice d'impulsion unique dans l'enroulement (30 et/ou 31) et en calculant ensuite une résistance de référence et, en conséquence, une température de référence ;
- couper provisoirement et, de préférence, volontairement l'alimentation de l'enroulement (30 et/ou 31) ;
- appliquer la tension perturbatrice/le courant perturbateur d'impulsion unique et calculer, en conséquence, la température de l'enroulement (30 et/ou 31) ;
- corriger la température mesurée par un facteur de correction approprié, en fonction d'une sous-plage de température à laquelle appartient la mesurée effectuée, ladite plage de température étant de préférence incluse dans une plage de température maximale admissible pour le moteur/compresseur ; et
- émettre des signaux de commande appropriés pour le moteur/compresseur en fonction de la température mesurée et corrigée.

51. Compresseur, en particulier pour appareil frigorifique, **caractérisé en ce qu'**il comprend un dispositif de commande (1) selon l'une quelconque des revendications précédentes 1 à 27.

52. Compresseur, en particulier pour appareil frigorifique, **caractérisé en ce qu'**il comprend un dispositif de commande (1) fonctionnant selon le procédé conforme à l'une quelconque des revendications 28 à 50.
